# EUROPEAN PATENT APPLICATION

(11) **EP 4 611 291 A1**
(43) Date of publication of application: **03.09.2025**
(21) Application number: 25151996.3
(22) Date of filing: 15.01.2025
(51) Int. Cl.: H04L 1/00, H04L 5/00, H04W 84/12

(54) **APPARATUS, SYSTEM, AND METHOD OF COMMUNICATING UNEQUAL MODULATION AND CODING SCHEME (MCS) (UEM) INFORMATION**

(30) Priority: 29.02.2024 US 202418591689
(71) Applicant: INTEL Corporation, Santa Clara, CA 95054 (US)
(72) Inventor: SONG, Hao, Santa Clara, CA, 95054 (US); LI, Qinghua, San Ramon CA, 94583 (US); GUREVITZ, Assaf, 4704345 Ramat Hasharon M (IL); HUANG, Po-Kai, San Ramon, CA, 94582 (US); VITURI, Shlomi, 6732925 Tel Aviv (IL)
(74) Representative: Viering, Jentschura & Partner mbB Patent- und Rechtsanwälte

(57) **Abstract**

For example, an AP may be configured to set RU allocation information for a user STA in an RU allocation subfield of a user field for the user STA. For example, the RU allocation information for the user STA may indicate an RU allocation for a TB UL transmission from the user STA. For example, the AP may be configured to set a 7-bit UL MCS subfield, for example, after the RU allocation subfield, to indicate a first MCS and a second MCS for the user STA. For example, the first MCS may be assigned to a first UL resource of the RU allocation for the user STA, and the second MCS may be assigned to a second UL resource of the RU allocation for the user STA. For example, the AP may be configured to transmit a trigger frame including the user field for the user STA.

## Description

### BACKGROUND

Devices in a wireless communication system may be configured to communicate according to communication protocols, which may utilize a Modulation and Coding Scheme (MCS).

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of a user information (info) field format, in accordance with some demonstrative aspects.
Fig. 3 is a schematic illustration of a user info field format, which may be implemented in accordance with some demonstrative aspects.
Fig. 4 is a schematic illustration of a user info field format, in accordance with some demonstrative aspects.
Fig. 5 is a schematic illustration of a user info field format, in accordance with some demonstrative aspects.
Fig. 6 is a schematic illustration of a user info field format, in accordance with some demonstrative aspects.
Fig. 7 is a schematic flow-chart illustration of a method of communicating Unequal Modulation and Coding Scheme (MCS) (UEM) information, in accordance with some demonstrative aspects.
Fig. 8 is a schematic flow-chart illustration of a method of communicating UEM information, in accordance with some demonstrative aspects.
Fig. 9 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (*IEEE 802.11-2020, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications, December, 2020);* and/or IEEE 802.11be (*IEEE P802.11be*/*D4.0 Draft Standard for Information technology- Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), July 2023);* and/or IEEE802.11bn (*IEEE 802.11bn Ultra High Reliability (UHR)*)) and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth□, Global Positioning System (GPS), Wi-Fi, Wi-Max, ZigBee^{™}, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared, dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20Ghz and 300GHz, for example, a frequency band above 45GHz, e.g., a 60GHz frequency band, and/or any other mmWave frequency band. Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S 1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

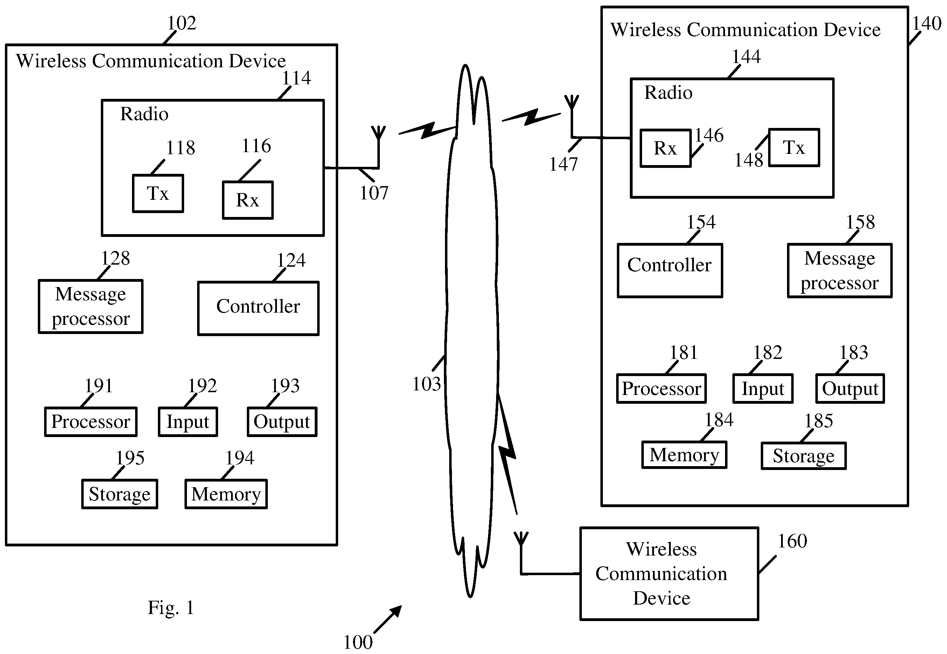

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, a wireless communication device 160, and/or one more other devices.

In some demonstrative aspects, devices 102, 140, and/or 160 may include a mobile device or a non-mobile, e.g., a static, device.

For example, devices 102, 140, and/or 160 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102, 140, and/or 160 may be capable of communicating content, data, information and/or signals via a wireless medium (WM) 103. In some demonstrative aspects, wireless medium 103 may include, for example, a radio channel, an RF channel, a WiFi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10Ghz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternatively include one or more channels in an mmWave wireless communication frequency band. In other aspects, WM 103 may include any other type of channel over any other frequency band.

In some demonstrative aspects, device 102, device 140, and/or device 160 may include one or more radios including circuitry and/or logic to perform wireless communication between devices 102, 140, 160, and/or one or more other wireless communication devices. For example, device 102 may include one or more radios 114, and/or device 140 may include one or more radios 144.

In some demonstrative aspects, radios 114 and/or radios 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5Gband, an S 1G band, and/or any other band.

In some demonstrative aspects, radios 114 and/or 144 may include, or may be associated with one or more antennas.

In some demonstrative aspects, device 102 may include one or more antennas 107, and/or device 140 may include on or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140, 160 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140, 160 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102, device 140, and/or device 160 may include, operate as, perform the role of, and/or perform one or more functionalities of, one or more STAs. For example, device 102 may include at least one STA, device 140 may include at least one STA, and/or device 160 may include at least one STA.

In some demonstrative aspects, device 102, device 140, and/or device 160 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102, device 140, and/or device 160 may be configured to perform one or more operations, and/or functionalities of a WiFi 8 STA.

In other aspects, for example, devices 102, 140 and/or 160 may be configured to perform one or more operations, and/or functionalities of an Ultra High Reliability (UHR) STA.

In other aspects, for example, devices 102, 140, and/or 160 may be configured to perform one or more operations, and/or functionalities of any other additional or alternative type of STA.

In other aspects, device 102, device 140, and/or device 160 may include, operate as, perform the role of, and/or perform one or more functionalities of, any other wireless device and/or station, e.g., a WLAN STA, a WiFi STA, and the like.

In some demonstrative aspects, device 102, device 140, and/or device 160 may be configured operate as, perform the role of, and/or perform one or more functionalities of, an Access Point (AP), e.g., a High Throughput (HT) AP STA, a High Efficiency (HE) AP STA, an EHT AP STA and/or a UHR AP STA.

In some demonstrative aspects, device 102, device 140, and/or device 160 may be configured to operate as, perform the role of, and/or perform one or more functionalities of, a non-AP STA, e.g., an HT non-AP STA, an HE non-AP STA, an EHT non-AP STA and/or a UHR non-AP STA.

In other aspects, device 102, device 140, and/or device 160 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF). The AP may perform any other additional or alternative functionality.

In some demonstrative aspects devices 102, 140, and/or 160 may be configured to communicate in an HT network, an HE network, an EHT network, a UHR network, and/or any other network.

In some demonstrative aspects, devices 102, 140 and/or 160 may be configured to operate in accordance with one or more Specifications, for example, including one or more *IEEE 802.11 Specifications,* e.g., an *IEEE 802.11-2020 Specification, an IEEE 802.11ax Specification,* and/or any other specification and/or protocol.

In some demonstrative aspects, device 102 may include, operate as, perform a role of, and/or perform the functionality of, an AP STA.

In some demonstrative aspects, device 140, and/or device 160 may include, operate as, perform a role of, and/or perform the functionality of, one or more non-AP STAs. For example, device 140 may include, operate as, perform a role of, and/or perform the functionality of, at least one non-AP STA, and/or device 160 may include, operate as, perform a role of, and/or perform the functionality of, at least one non-AP STA.

In some demonstrative aspects, device 102, device 140, and/or device 160 may include, operate as, perform a role of, and/or perform the functionality of, a Multi-Link Device (MLD). For example, device 102 may include, operate as, perform a role of, and/or perform the functionality of, at least one MLD, device 140 may include, operate as, perform a role of, and/or perform the functionality of, at least one MLD, and/or device 160 may include, operate as, perform a role of, and/or perform the functionality of, at least one MLD, e.g., as described below.

For example, an MLD may include a device that is a logical entity that is capable of supporting more than one affiliated station (STA) and can operate using one or more affiliated STAs. For example, the MLD may present one Medium Access Control (MAC) data service and a single MAC Service Access Point (SAP) to the Logical Link Control (LLC) sublayer. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102, device 140, and/or device 160 may be configured to operate as, perform the role of, and/or perform one or more functionalities of, an AP MLD.

In some demonstrative aspects, device 102, device 140, and/or device 160 may be configured to operate as, perform the role of, and/or perform one or more functionalities of, a non-AP MLD.

In other aspects, device 102, device 140, and/or device 160 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In some demonstrative aspects, device 102, device 140, and/or device 160 may be configured to communicate according to a resource allocation mechanism, which may assign a Resource Unit (RU) or a multiple Resource Unit (MRU) to a user (also referred to as "user STA"), e.g., as described below.

In some demonstrative aspects, device 102, device 140, and/or device 160 may be configured to communicate according to a resource allocation mechanism, which may support assignment of a RU/MRU to a user utilizing the same, e.g., equal, modulation and coding scheme (MCS), e.g., as described below.

In some demonstrative aspects, device 102, device 140, and/or device 160 may be configured to communicate according to a resource allocation mechanism, which may support assignment of a RU/MRU to a user utilizing a plurality of different, e.g., unequal, MCSs, e.g., as described below.

In some demonstrative aspects, for example, in some implementations, scenarios, use cases, and/or deployments, there may be one or more technical issues in implementations, which assign an RU or an MRU to a user utilizing the same MCS, e.g., across the entire RU/MRU assigned to the user.

For example, utilizing the same MCS for the entire assigned RU/MRU may result in low throughput, for example, when the RU assigned to the user is across a primary channel and secondary channels.

For example, utilizing the same MCS for the entire assigned RU/MRU may result in low throughput, for example, as a primary channel and a secondary channel may adopt different clear channel assessment (CCA) methods, signal detect CCA and/or energy detect CCA, which may have different sensitivities with respect to the different channels, spatial streams, and/or frequency sub-bands. For example, on a 20MHz primary channel and a 20MHz secondary channel, the sensitivity thresholds may be -82 decibel-milliwatts (dBm) (signal detect CCA) and/or -62dBm (energy detect CCA), respectively. For example, adopting different CCA methods for primary and secondary channels may result in significant signal-to-noise ratio (SNR) imbalance between the primary and secondary channels.

In some demonstrative aspects, device 102, device 140, and/or device 160 may be configured to implement an MCS allocation scheme (also referred to as an "unequal MCS allocation scheme"), which may be configured to assign a plurality of MCSs, e.g., including two or more different MCSs, to a plurality of different segments of an RU/MRU, for example, a plurality of frequency sub-blocks (also referred to as "frequency sub-bands"), e.g., as described below.

In some demonstrative aspects, the unequal MCS allocation scheme may be configured to provide a technical solution address SNR imbalance, for example, to support assignment of different MCSs to different segments of an RU/MRU, for example, when these segments have considerable variations on SNR, for example, in order to fit to their SNR conditions and/or to achieve high throughput, e.g., as described below.

In some demonstrative aspects, the unequal MCS allocation scheme may be configured to provide a technical solution to support allocation of unequal MCS over spatial streams, e.g., as described below.

For example, the unequal MCS over spatial streams may be configured to provide a technical solution to support Multiple-Input-Multiple-Output (MIMO), for example, where MIMO gains are different on different spatial streams, thereby causing various SNR conditions.

In some demonstrative aspects, the unequal MCS allocation scheme may be configured to provide a technical solution to support applying unequal MCSs in different spatial streams and/or on different frequency sub-blocks, for example, to support improved, e.g., significantly improved, throughput.

In some demonstrative aspects, the unequal MCS allocation scheme may be configured to provide a technical solution to support assignment, e.g., adaptive assignment, of varying MCSs to different frequency sub-bands and/or spatial streams, for example, according to varying SNR conditions.

In some demonstrative aspects, the unequal MCS allocation scheme may be configured to provide a technical solution to support assignment of unequal MCS over a plurality of frequency sub-channels, e.g., as described below.

In some demonstrative aspects, the unequal MCS allocation scheme may be configured to provide a technical solution to support assignment of unequal MCS over a plurality of spatial streams, e.g., as described below.

In some demonstrative aspects, the unequal MCS allocation scheme may be configured to provide a technical solution to support assignment of unequal MCS over both a plurality of frequency sub-channels and a plurality of spatial streams, e.g., as described below.

In some demonstrative aspects, the unequal MCS allocation scheme may be configured to support unequal MCS over a plurality of frequency channels, over a plurality of spatial streams, and/or over both frequency sub-channels and spatial streams, for example, in Uplink (UL) transmissions, e.g., as described below.

In some demonstrative aspects, there may be a need to provide a technical solution to support signaling of the unequal MCS assignment for UL resources. For example, some trigger frame formats and/or fields, e.g., a trigger frame format in accordance with an *IEEE 802.11be Specification,* may only support an assignment of a single MCS to each user, for example, such that only a single MCS may be used by a user to conduct Trigger Based (TB) UL transmissions.

In some demonstrative aspects, the unequal MCS signaling mechanism may utilize one or more user information (info) fields in a trigger frame, which may be configured to enable unequal MCSs over a plurality of frequency sub-channels and/or spatial streams, for example, in TB UL transmissions, e.g., as described below.

In some demonstrative aspects, the unequal MCS signaling mechanism may utilize one or more user information (info) fields in a trigger frame to assign a plurality of MCSs, e.g., different MCSs, to a plurality of UL resources, e.g., different UL resources, in an RU/MRU, e.g., as described below.

In some demonstrative aspects, the unequal MCS signaling mechanism may utilize one or more user information (info) fields in a trigger frame to assign a plurality of MCSs, e.g., different MCSs, to a plurality of frequency sub-channels, e.g., different frequency sub-channels, in an RU/MRU, e.g., as described below.

In some demonstrative aspects, the unequal MCS signaling mechanism may utilize one or more user info fields in a trigger frame to assign a plurality of MCSs, e.g., different MCSs, to a plurality of spatial streams, e.g., different spatial streams, for example, in case MIMO is applied.

In some demonstrative aspects, the unequal MCS signaling mechanism may utilize one or more user info fields in a trigger frame to assign a plurality of MCSs to both frequency sub-channels and spatial streams, e.g., as described below.

In some demonstrative aspects, the unequal MCS signaling mechanism may utilize one or more trigger frames, which may be configured according to a trigger frame format, which may be configured to apply, e.g., adaptively apply, unequal MCSs to a plurality of UL resources, for example, including frequency sub-channels, e.g., different frequency sub-channels, and/or spatial streams, e.g., as described below.

In some demonstrative aspects, the unequal MCS signaling mechanism may utilize a trigger frame format, which may be configured to signal unequal MCSs to be applied to a plurality of UL resources, e.g., frequency sub-channels and/or spatial streams, within varying wireless environments, for example, in trigger based PPDU UL transmissions, e.g., as described below.

For example, the unequal MCS signaling mechanism may utilize a trigger frame format, e.g., a simplified and efficient trigger frame format, which may be configured to support an assignment of unequal MCSs over a relatively small number of spatial streams.

For example, the unequal MCS signaling mechanism may utilize the trigger frame format, which may be configured to support up to two spatial streams with two unequal MCSs, which may be assigned to a user, for example, when unequal MCS is applied.

For example, the unequal MCS signaling mechanism may utilize the trigger frame format, which may be configured to support up to two MCSs. For example, configuring the trigger frame format to support up to two MCSs may provide a technical solution to utilize a user field format, for example, even without adding additional fields and/or signaling, for example, to support a technical solution with low complexity, low cost, and/or high efficiency.

In some demonstrative aspects, device 102, device 140, and/or device 160 may be configured to implement a signaling mechanism, which may be configured to support signaling of UEM assignment information to indicate, for example, a UEM assignment over a plurality of frequency sub-channels and/or spatial streams, e.g., as described below.

In some demonstrative aspects, the signaling mechanism may be configured to communicate the UEM assignment information, for example, in compliance with a user field format, e.g., in accordance with an *IEEE 802.11be Specification,* e.g., as described below.

For example, a user info field format, e.g., in accordance with an *IEEE 802.11be Specification,* may only support assigning a single MCS to each user. For example, the user info field format, e.g., in accordance with the *IEEE 802.11be Specification,* may only be able to support information of one MCS for each user.

In some demonstrative aspects, the user info field format may be redesigned, for example, to provide a technical solution to support, e.g., enable, unequal MCS, as described below.

In some demonstrative aspects, the user info field format may be redesigned, for example, to provide a technical solution to support using a user info field to deliver a plurality of MCSs for a user, e.g., for each user, e.g., as described below.

In some demonstrative aspects, the user info field format may be redesigned to support signaling of more than one MCS for a user, for example, while maintaining compliance with the design of the user info field format, e.g., in accordance with the *IEEE 802.11be Specification.*

In some demonstrative aspects, the user info field format may be redesigned to support signaling of more than one MCS for a user, for example, while avoiding addition of additional fields and/or subfields into the user info field format, e.g., as described below. For example, addition of fields and/or subfields into the user info field format may result in increased complexity and/or low compatibility.

In some demonstrative aspects, for example, in some implementations, scenarios, use cases, and/or deployments, it may be enough to support an assignment of unequal MCSs over a relatively small number of spatial streams.

For example, in many use cases and/or implementations, it may be sufficient to use two spatial streams with two unequal MCSs, which may be assigned to a user, for example, when unequal MCS is applied.

In some demonstrative aspects, for example, in case of two spatial streams with two unequal MCSs, a user info field format may be redesigned to utilize one or more unused bits, e.g., such as reserved bits, and/or any other bits that may be saved in a user info field of a current trigger frame format, for example, to carry information of up to two unequal MCSs, e.g., as described below.

In some demonstrative aspects, a user info field format may be redesigned to utilize one or more bits of a user info field, which may be configured for a single MCS, to carry information of up to two unequal MCSs. For example, one or more bits in the user info field may be reorganized and exploited, for example, to carry the information of up to two unequal MCSs, for example, instead of deploying additional signaling and/or fields, e.g., as described below.

For example, the user info field format may be configured to provide a technical solution to render a format of a current trigger frame unchanged, e.g., for simplification and compatibility. For example, a change may be applied on a signaling level, for example, where a usage of bits in a current user info field may be redefined to enable signaling of unequal MCS information, e.g., as described below.

In some demonstrative aspects, device 102, device 140, and/or device 160 may be configured to utilize a redesigned user info field format, which may be configured to provide a technical solution to enable a trigger frame to trigger uplink transmissions with up to two unequal MCSs, e.g., over frequency channels and/or two spatial streams, for example, even without changing, and/or while maintaining compatibility with, a format of a current trigger frame, and/or without adding additional fields in the current trigger frame.

For example, redesigned user info field format may be implemented to provide a technical solution to support a trigger frame to trigger uplink transmissions with up to two unequal MCSs, for example, with low complexity and/or high efficiency, thus rendering usage of unequal MCSs applicable and/or implementable, e.g., in practice.

In some demonstrative aspects, device 102, device 140, and/or device 160 may be configured to implement an MCS signaling mechanism, which may be configured to provide a technical solution to support signaling MCS assignment information, for example, while using a user info field format, which may be, for example, in compliance with an EHT user info field format, for example according to the *IEEE 802.11be Specification,* e.g., as described below.

In some demonstrative aspects, the MCS signaling mechanism may be configured to provide a technical solution to support signaling MCS assignment information, for example, while using a user info field format, which may be configured to support signaling an MCS assignment of a plurality of MCSs for a user, e.g., as described below.

In some demonstrative aspects, the user info field format may be configured to support signaling an MCS assignment of two unequal MCSs for a user, e.g., as described below.

In some demonstrative aspects, the MCS signaling mechanism may configured to provide a technical solution to support signaling MCS assignment information, for example, while using a user info field format, which may be compatible with an EHT user info field format, e.g., in compliance with the *IEEE 802.11be Specification,* e.g., as described below.

In some demonstrative aspects, the MCS signaling mechanism may be configured to utilize the user info field format, which may be compatible with an EHT user info field format, for example, to provide a technical solution to support signaling of MCS assignment information, for example, with reduced complexity and/or high compatibility, e.g., as described below.

In some demonstrative aspects, device 102, device 140, and/or device 160 may be configured to implement an MCS signaling mechanism, which may be configured to support an unequal MCS with two MCSs for a user, for example, while using a user info field format (also referred to as "UEM user info field format" or "UHR user info field format"), which may be configured in compliance with the EHT user info field format, e.g., in accordance with the *IEEE 802.11be Specification.*

In some demonstrative aspects, the user info field format may be configured to support signaling of a plurality of MCSs, e.g., two MCSs, peruser, e.g., as described below.

In some demonstrative aspects, the user info field format may be configured to provide a technical solution to support signaling of the plurality of MCS per user, for example, while maintaining compatibility with a structure of a user info field in compliance with the *IEEE 802.11be Specification,* which may be substantially unchanged, e.g., as described below.

In some demonstrative aspects, the user info field format may be configured to provide a technical solution to support signaling of the plurality of MCSs per user, for example, even without adding any additional fields and/or subfields to the user info field format, for example, in accordance with the *IEEE 802.11be Specification,* e.g., as described below.

In some demonstrative aspects, controller 124 may be configured to control, trigger, cause, and/or instruct an AP implemented by device 102 to set RU allocation information for a user ( also referred to as "user STA") in an RU allocation subfield of a user field for the user STA, e.g., as described below.

In some demonstrative aspects, the RU allocation information for the user STA may be configured to indicate an RU allocation for a TB UL transmission from the user STA, e.g., as described below.

In some demonstrative aspects, controller 124 may be configured to control, trigger, cause, and/or instruct the AP implemented by device 102 to set a 7-bit UL MCS subfield to indicate a first MCS and a second MCS for the user STA, e.g., as described below.

In some demonstrative aspects, the first MCS may be assigned to a first UL resource of the RU allocation for the user STA, e.g., as described below.

In some demonstrative aspects, the second MCS may be assigned to a second UL resource of the RU allocation for the user STA, e.g., as described below.

In some demonstrative aspects, the 7-bit UL MCS subfield may be after the RU allocation subfield, e.g., as described below.

In some demonstrative aspects, controller 124 may be configured to control, trigger, cause, and/or instruct the AP implemented by device 102 to transmit a trigger frame including the user field for the user STA, e.g., as described below.

In some demonstrative aspects, the trigger frame may include an EHT trigger frame.

In some demonstrative aspects, the trigger frame may include a UHR trigger frame.

In some demonstrative aspects, the 7-bit UL MCS subfield may include a UHR MCS subfield.

In other aspects, the trigger frame may include any other type of trigger frame.

In other aspects, the 7-bit UL MCS subfield may include any other type of MCS subfield.

In some demonstrative aspects, the first MCS for the user STA may be different from the second MCS for the user STA, e.g., as described below.

In some demonstrative aspects, the first MCS and the second MCS may be configured to have a same code rate, e.g., as described below.

In some demonstrative aspects, the first MCS may be configured to have a higher modulation order than the second MCS, e.g., as described below.

In other aspects, the first MCS for the user STA may be equal to the second MCS for the user STA.

In some demonstrative aspects, the first UL resource of the RU allocation for the user STA may include a first frequency sub-channel, and the second UL resource of the RU allocation for the user STA may include a second frequency sub-channel, e.g., as described below.

In some demonstrative aspects, the first UL resource may include one or more first spatial streams, and the second UL resource may include one or more second spatial streams, e.g., as described below.

In some demonstrative aspects, controller 124 may be configured to control, trigger, cause, and/or instruct the AP implemented by device 102 to process an UL PPDU from the user STA, for example, according to the first MCS assigned to the first UL resource of the RU allocation for the user STA and the second MCS assigned to the second UL resource of the RU allocation for the user STA, e.g., as described below.

In some demonstrative aspects, the user field for the user STA may be configured, for example, according to a user field format, e.g., as described below.

In some demonstrative aspects, the user field format may be configured in compliance with a user info field format, e.g., as described below.

In some demonstrative aspects, the user field format may include a STA identifier (ID) (STA-ID) subfield, which may be configured to identify the user STA, e.g., as described below.

In some demonstrative aspects, the user field format may include the RU allocation subfield, for example, after the STA-ID subfield, e.g., as described below.

In some demonstrative aspects, the user field format may include the 7-bit UL MCS subfield, for example, after the RU allocation subfield in the user field for the user STA, e.g., as described below.

In some demonstrative aspects, the user field format may be configured, for example, such that the 7-bit UL MCS subfield is immediately after the RU allocation subfield in the user field for the user STA, e.g., as described below.

In other aspects, the user field format may include any other additional or alternative subfields according to any other suitable arrangement and/or order.

In some demonstrative aspects, controller 124 may be configured to control, trigger, cause, and/or instruct the AP implemented by device 102 to set 4 bits in the 7-bit UL MCS subfield to a first MCS value to indicate the first MCS, e.g., as described below.

In some demonstrative aspects, controller 124 may be configured to control, trigger, cause, and/or instruct the AP implemented by device 102 to set 3 bits in the 7-bit UL MCS subfield to a second MCS value to indicate the second MCS, e.g., as described below.

In some demonstrative aspects, the 3 bits in the 7-bit UL MCS subfield, which are set to the second MCS value, may be located after the 4 bits in the 7-bit UL MCS subfield, which are set to the first MCS value, e.g., as described below.

In other aspects, the 3 bits in the 7-bit UL MCS subfield, which are set to the second MCS value, may be located before the 4 bits in the 7-bit UL MCS subfield, which are set to the first MCS value.

In some demonstrative aspects, the first MCS may have a higher modulation order than the second MCS, e.g., as described below.

In some demonstrative aspects, the first MCS value may include an MCS index of the first MCS, e.g., as described below.

In some demonstrative aspects, the second MCS value may be configured to indicate the second MCS, for example, based on the first MCS value, e.g., as described below.

In some demonstrative aspects, the second MCS value may be configured to indicate a difference between a modulation order of the first MCS and a modulation order of the second MCS, e.g., as described below.

In some demonstrative aspects, the second MCS value may be configured to indicate the second MCS, for example, based on a predefined mapping of a plurality of predefined second MCSs to a plurality of combinations between a plurality of predefined first MCS values and a plurality of predefined second MCS values, e.g., as described below.

In other aspects, the first MCS value may be configured to indicate any other alternative or additional information regarding the first MCS, and/or the second MCS value may be configured to indicate any other alternative or additional information regarding the second MCS.

In some demonstrative aspects, controller 124 may be configured to control, trigger, cause, and/or instruct the AP implemented by device 102 to set the 7-bit UL MCS subfield to a 7-bit MCS-combination value configured to indicate both the first MCS and the second MCS, e.g., as described below.

In some demonstrative aspects, the 7-bit MCS-combination value may be configured to indicate both the first MCS and the second MCS, for example, based on a predefined mapping of a plurality of predefined MCS-combination values to a plurality of predefined combinations of first and second MCSs, e.g., as described below.

In some demonstrative aspects, controller 124 may be configured to control, trigger, cause, and/or instruct the AP implemented by device 102 to set the 7-bit UL MCS subfield to include a coding-rate value, e.g., as described below.

In some demonstrative aspects, controller 124 may be configured to control, trigger, cause, and/or instruct the AP implemented by device 102 to set the 7-bit UL MCS subfield to include a modulation value, e.g., as described below.

In some demonstrative aspects, controller 124 may be configured to control, trigger, cause, and/or instruct the AP implemented by device 102 to set the 7-bit UL MCS subfield to include the coding-rate value and the modulation value, e.g., as described below.

In some demonstrative aspects, the coding rate value may be configured to indicate a same coding rate for both the first MCS and the second MCS, e.g., as described below.

In some demonstrative aspects, the modulation value may be configured to indicate a modulation of the first MCS and a modulation of the second MCS, e.g., as described below.

In some demonstrative aspects, the modulation value may be configured to indicate both the modulation of the first MCS and the modulation of the second MCS, for example, based on a predefined mapping of a plurality of predefined modulations values to a plurality of predefined combinations of first and second modulations, e.g., as described below.

In other aspects, the coding rate value and/or the modulation value may be configured to include any other suitable information to indicate the first MCS and the second MCS.

In some demonstrative aspects, controller 124 may be configured to control, trigger, cause, and/or instruct the AP implemented by device 102 to set 2 bits in the 7-bit UL MCS subfield to the coding-rate value, e.g., as described below.

In some demonstrative aspects, controller 124 may be configured to control, trigger, cause, and/or instruct the AP implemented by device 102 to set 5 bits in the 7-bit UL MCS subfield to the modulation value, e.g., as described below.

In other aspects, the 7-bit UL MCS subfield may include any other combination of bits to indicate the coding-rate value and/or the modulation value.

In some demonstrative aspects, the 5 bits in the 7-bit UL MCS subfield, which are set to the modulation value, may be located after the 2 bits in the 7-bit UL MCS subfield, which are set to the coding-rate value, e.g., as described below.

In other aspects, the 5 bits in the 7-bit UL MCS subfield, which are set to the modulation value, may be located before the 2 bits in the 7-bit UL MCS subfield, which are set to the coding-rate value, e.g., as described below.

In some demonstrative aspects, controller 124 may be configured to control, trigger, cause, and/or instruct the AP implemented by device 102 to set a 5-bit Spatial Stream (SS) allocation subfield in the user field for the user STA to indicate a SS allocation for the user STA, e.g., as described below.

In some demonstrative aspects, controller 124 may be configured to control, trigger, cause, and/or instruct the AP implemented by device 102 to set the 5-bit SS allocation subfield, for example, after the 7-bit UL MCS subfield, e.g., as described below.

In some demonstrative aspects, controller 124 may be configured to control, trigger, cause, and/or instruct the AP implemented by device 102 to set 3 bits of the 5-bit SS allocation subfield to indicate a starting SS, e.g., as described below.

In some demonstrative aspects, controller 124 may be configured to control, trigger, cause, and/or instruct the AP implemented by device 102 to set 2 bits of the 5-bit SS allocation subfield to indicate a number of spatial streams, e.g., as described below.

In some demonstrative aspects, the user field format of the user field for the user STA may include the 5-bit SS allocation subfield, for example, after the 7-bit UL MCS subfield, e.g., as described below.

In some demonstrative aspects, the user field format may be configured, for example, such that the 5-bit SS allocation subfield is immediately after the 7-bit UL MCS subfield, e.g., as described below.

In other aspects, the user field format may include any other additional or alternative subfields, which may be arranged according to any other suitable arrangement and/or order.

In some demonstrative aspects, controller 124 may be configured to control, trigger, cause, and/or instruct the AP implemented by device 102 to set an other user field in the trigger frame, e.g., as described below.

In some demonstrative aspects, the other user field may include other RU allocation information to indicate an other RU allocation for an other user STA, e.g., as described below.

In some demonstrative aspects, the other user field may include a 4-bit UL MCS subfield, which may include an MCS index to indicate an MCS to be applied over the entire RU allocation for the other user STA, e.g., as described below.

In some demonstrative aspects, controller 154 may be configured to control, trigger, cause, and/or instruct a user STA implemented by device 140 to process a user field for the user STA in a trigger frame from an AP, for example, to identify an RU allocation for the user STA, e.g., as described below.

In some demonstrative aspects, controller 154 may be configured to control, trigger, cause, and/or instruct the user STA implemented by device 140 to identify the RU allocation for the user STA, for example, based on RU allocation information in an RU allocation subfield of the user field for the user STA.

In some demonstrative aspects, the trigger frame received by the user STA implemented by device 140 may include the trigger frame transmitted by the AP implemented by device 102, e.g., as described above.

In some demonstrative aspects, controller 154 may be configured to control, trigger, cause, and/or instruct the user STA implemented by device 140 to process a 7-bit UL MCS subfield in the user field for the user STA in the trigger frame, for example, to identify a first MCS and a second MCS for the user STA, e.g., as described below.

In some demonstrative aspects, the first MCS may be assigned to a first UL resource of the RU allocation for the user STA, e.g., as described below.

In some demonstrative aspects, the second MCS may be assigned to a second UL resource of the RU allocation for the user STA, e.g., as described below.

In some demonstrative aspects, the 7-bit UL MCS subfield may be after the RU allocation subfield, e.g., as described below.

In some demonstrative aspects, controller 154 may be configured to control, trigger, cause, and/or instruct the user STA implemented by device 140 to transmit a TB UL transmission from the user STA, for example, based on the assignment of the first MCS to the first UL resource of the RU allocation for the user STA, and the assignment of the second MCS to the second UL resource of the RU allocation for the user STA, e.g., as described below.

In some demonstrative aspects, controller 154 may be configured to control, trigger, cause, and/or instruct the user STA implemented by device 140 to process 4 bits in the 7-bit UL MCS subfield, for example, to identify a first MCS value, which is to indicate the first MCS, e.g., as described below.

In some demonstrative aspects, controller 154 may be configured to control, trigger, cause, and/or instruct the user STA implemented by device 140 to process 3 bits in the 7-bit UL MCS subfield, for example, to identify a second MCS value, which is to indicate the second MCS, e.g., as described below.

In some demonstrative aspects, controller 154 may be configured to control, trigger, cause, and/or instruct the user STA implemented by device 140 to process the 7-bit UL MCS subfield to identify a 7-bit MCS-combination value configured to indicate both the first MCS and the second MCS, e.g., as described below.

In some demonstrative aspects, controller 154 may be configured to control, trigger, cause, and/or instruct the user STA implemented by device 140 to process the 7-bit UL MCS subfield to identify a coding-rate value, which indicates a same coding rate for both the first MCS and the second MCS, e.g., as described below.

In some demonstrative aspects, controller 154 may be configured to control, trigger, cause, and/or instruct the user STA implemented by device 140 to process the 7-bit UL MCS subfield to identify a modulation value, which indicates a modulation of the first MCS and a modulation of the second MCS, e.g., as described below.

In some demonstrative aspects, controller 154 may be configured to control, trigger, cause, and/or instruct the user STA implemented by device 140 to process the 7-bit UL MCS subfield to identify the coding-rate value and the modulation value, e.g., as described below.

In some demonstrative aspects, controller 154 may be configured to control, trigger, cause, and/or instruct the user STA implemented by device 140 to process 2 bits in the 7-bit UL MCS subfield to identify the coding-rate value, e.g., as described below.

In some demonstrative aspects, controller 154 may be configured to control, trigger, cause, and/or instruct the user STA implemented by device 140 to process 5 bits in the 7-bit UL MCS subfield to identify the modulation value, e.g., as described below.

In some demonstrative aspects, controller 154 may be configured to control, trigger, cause, and/or instruct the user STA implemented by device 140 to process a 5-bit SS allocation subfield in the user field, for example, to identify a SS allocation for the user STA, e.g., as described below.

In some demonstrative aspects, controller 154 may be configured to control, trigger, cause, and/or instruct the user STA implemented by device 140 to process 3 bits of the 5-bit SS allocation subfield, for example, to identify a starting SS, e.g., as described below.

In some demonstrative aspects, controller 154 may be configured to control, trigger, cause, and/or instruct the user STA implemented by device 140 to process 2 bits of the 5-bit SS allocation subfield, for example, to identify a number of spatial streams, e.g., as described below.

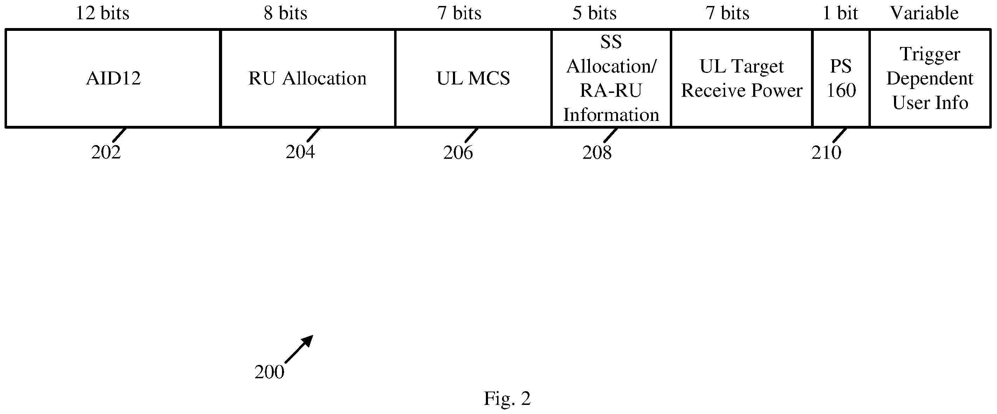

Reference is made to Fig. 2, which schematically illustrates a format of a user info field 200, in accordance with some demonstrative aspects.

For example, user info field 200 may include a user field format, which may be included in a trigger frame.

For example, user info field 200 may include a user field format, which may be configured to carry information for a user, for example, to indicate information for a TB UL transmission from the user.

For example, device 102 (Fig. 1) may be configured to generate, process, and/or transmit a trigger frame, which may include user info field 200, for example, to provide user-specific information for a user to transmit a TB UL transmission.

For example, device 140 (Fig. 1) and/or device 160 (Fig. 1) may be configured to receive and/or process a trigger frame including user info field 200, for example, to identify user specific information corresponding to a user to perform a TB UL transmission.

In some demonstrative aspects, the trigger frame may include an EHT trigger frame.

In some demonstrative aspects, the trigger frame may include a UHR trigger frame.

In other aspects, user info field 200 may be included as part of any other type of trigger frame.

In some demonstrative aspects, as shown in Fig. 2, user info field 200 may include a STA-ID subfield 202, e.g., an Allocation Identifier (AID12) subfield 202, to identify the user to which the user info field 200 corresponds.

For example, a user, which receives a trigger frame including the user info field 200, may be able to identify its user info field, for example, by finding an identification of the user, e.g., the AID12 of the user, in AID12 subfield 202.

In some demonstrative aspects, as shown in Fig. 2, user info field 200 may include a plurality of subfields, e.g., including an RU allocation subfield 204 and a PS 160 subfield 210, which may be configured to indicate to the user a size and/or a location of an RU allocated to the user.

For example, a user, which receives a trigger frame including the user info field 200 may be able to identify the size and/or location of an RU allocated to the user based on the information in the RU allocation subfield 204 and the PS 160 subfield 210, for example, along with information in an UL BW subfield, e.g., in a Common Info field and/or an UL BW Extension subfield in a Special User Info field of the trigger frame (not shown in Fig. 2).

In some demonstrative aspects, RU allocation subfield 204 may be configured to indicate an RU allocation for a TB UL transmission from the user identified by the AID 12 subfield 202.

In some demonstrative aspects, as shown in Fig. 2, user info field 200 may include an SS Allocation/RA-RU Information subfield 208, for example, after the RU allocation subfield 204.

In some demonstrative aspects, SS Allocation/RA-RU Information subfield 208 may be configured to indicate a SS allocation for the user. For example, SS Allocation/RA-RU Information subfield 208 may be configured to indicate to the user a starting SS and/or a number of spatial streams (SSs) assigned to the user.

In some demonstrative aspects, as shown in Fig. 2, user info field 200 may include an UL MCS subfield 206, for example, between the RU allocation subfield 204 and the SS Allocation/RA-RU Information subfield 208.

In some demonstrative aspects, UL MCS subfield 206 may be configured to indicate a first MCS to be assigned to a first UL resource of the RU allocation for the user, and a second MCS to be assigned to a second UL resource of the RU allocation for the user, e.g., as described below.

In some demonstrative aspects, UL MCS subfield 206 may include a first MCS value to indicate the first MCS to be assigned to the first UL resource of the RU allocation for the user, and a second MCS value to indicate the second MCS to be assigned to the second UL resource of the RU allocation for the user, e.g., as described below.

In some demonstrative aspects, UL MCS subfield 206 may include an MCS-combination value configured to indicate both the first MCS and the second MCS for the user, e.g., as described below.

In some demonstrative aspects, UL MCS subfield 206 may include a coding-rate value to indicate a same coding rate for both the first MCS and the second MCS for the user, e.g., as described below.

In some demonstrative aspects, UL MCS subfield 206 may include a modulation value configured to indicate a modulation of the first MCS and a modulation of the second MCS for the user, e.g., as described below.

In other aspects, UL MCS subfield 206 may include any other additional or alternative information to indicate an assignment of a plurality of MCSs for the user.

In some demonstrative aspects, UL MCS subfield 206 may include a 7-bit UL MCS subfield having a size of 7 bits, e.g., as described below.

In other aspects, UL MCS subfield 206 may have any other bit size.

In some demonstrative aspects, SS Allocation/RA-RU Information subfield 208 may include a 5-bit SS Allocation/RA-RU Information subfield having a size of 5 bits, e.g., as described below.

In other aspects, SS Allocation/RA-RU Information subfield 208 may have any other bit size.

In some demonstrative aspects, a value of the SS Allocation/RA-RU Information subfield 208 may be configured, for example, to support an indication of up to two spatial streams per user and up to eight spatial streams in total, e.g., as described below.

In some demonstrative aspects, a value of the SS Allocation/RA-RU Information subfield 208 may be configured, for example, to support an indication of up to four spatial streams per user and up to eight spatial streams in total, e.g., as described below.

In some demonstrative aspects, the user info field 200 may be configured to be compatible with an EHT user info field format, e.g., in accordance with the *IEEE 802.11be Specification.*

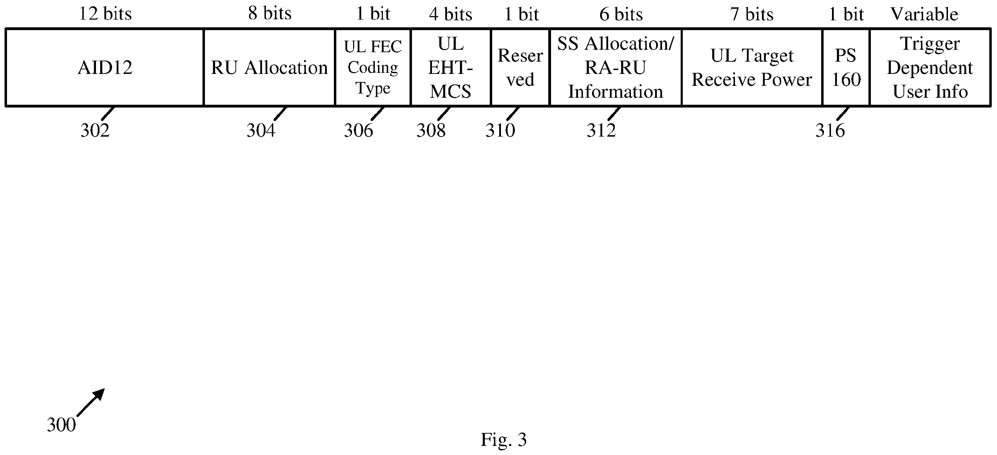

Reference is made to Fig. 3, which schematically illustrates a format of a user info field 300, which may be implemented in accordance with some demonstrative aspects.

In some demonstrative aspects, as shown in Fig. 3, user info field 300 may include an AID12 subfield 302 configured to identify a user, e.g., in accordance with the *IEEE 802.11be Specification.* For example, a user, e.g., each user, which receives a trigger frame including the user info field 300, may be able to identify its user info field, for example, by finding an identification of the user, e.g., the AID12 of the user, in AID12 subfield 302.

In some demonstrative aspects, as shown in Fig. 3, user info field 300 may include a plurality of subfields, e.g., including an RU allocation subfield 304 and a PS160 subfield 316, which may be configured to indicate to the user a size and/or a location of an RU allocated to the user.

For example, a user, e.g., each user, which receives a trigger frame including the user info field 300 may be able to identify the size and/or location of an RU allocated to the user based on the information in the RU allocation subfield 304 and the PS160 subfield 316, for example, along with information in an UL BW subfield, e.g., in a Common Info field and/or an UL BW Extension subfield in a Special User Info field of the trigger frame (not shown in Fig. 3).

In some demonstrative aspects, user info field 300 may support a single RU allocation for a user, e.g., each user, such that each user may be allowed, e.g., may only be allowed, to be assigned with one RU/MRU.

In some demonstrative aspects, as shown in Fig. 3, user info field 300 may include an UL EHT-MCS subfield 308, which may be configured to indicate to the user its assigned MCS, e.g., a single MCS to be used over the entire RU/MRU allocation for the user.

In some demonstrative aspects, as shown in Fig. 3, user info field 300 may include an SS Allocation/RA-RU Information subfield 312, which may be configured to indicate to the user its assigned SSs.

For example, user info field 300 may support a single MCS allocation for a user, e.g., each user, such that each user may have, e.g., may only have, one MCS which may be represented by a 4-bit MCS index value in UL EHT-MCS subfield 308.

Referring back to Fig. 2, in some demonstrative aspects, the user info field 200 may be configured to provide a technical solution to support carrying information of two unequal MCSs for a user, e.g., while maintaining compliance with the user info field format 300 (Fig. 3), e.g., in accordance with the *IEEE 802.11be Specification.*

In some demonstrative aspects, it may be defined that user info field 200 is to include an UL MCS subfield, e.g., UL MCS subfield 206, for example, which may be configured to support carrying information of up to two unequal MCSs for a user, e.g., as described below.

In some demonstrative aspects, user info field 200 may be designed to include the 7-bit UL MCS subfield 206, for example, to support carrying information of up to two unequal MCSs for a user, e.g., as described below.

In some demonstrative aspects, UL MCS subfield 206 may be configured to provide a technical solution to utilize 7 bits, for example, to represent up to two MCSs of a user, e.g., as described below.

For example, UL MCS subfield 206 may be configured to include 4 bits of UL EHT-MCS subfield 308 (Fig. 3), e.g., according to an original UL EHT-MCS subfield definition. These 4 bits may be used to carry part of the information of up to two MCSs. For example, 3 additional bits may be included in the UL MCS subfield 206, for example, such that a total of 7 bits may be utilized to handle up to two unequal MCSs, e.g., as described below.

In some demonstrative aspects, UL MCS subfield 206 may be configured to include 4 bits, e.g., corresponding to the 4 bits of the UL EHT-MCS subfield 308 (Fig. 3) format, and 3 bits, which may be redistributed from one or more other subfields of user info field 300 (Fig. 3), e.g., as described below.

In some demonstrative aspects, UL MCS subfield 206 may include 7 bits in total, which may be used to deliver information of up to 2 unequal MCSs.

In some demonstrative aspects, a 1-bit UL Forward Error Correction (FEC) Coding Type subfield 306 (Fig. 3) of user info field 300 (Fig. 3) may be repurposed for MCS signaling, for example, as part of UL MCS subfield 206, e.g., as described below.

In some demonstrative aspects, a bit of the 3 additional bits assigned to UL MCS subfield 206 may be obtained from the UL FEC Coding Type subfield 306 (Fig. 3). For example, the UL FEC Coding Type subfield 306 (Fig. 3) may be configured to indicate a coding type, e.g., a Low-Density Parity Check (LDPC) or a Block Convolutional Code (BCC).

For example, in some implementations and/or use cases, LDPC, e.g., only LDPC, may be applied to transmit data, for example, in Wi-Fi systems, for example, in accordance with the *IEEE 802.11be Specification* and/or future versions and/or derivatives thereof. Accordingly, the UL FEC Coding Type subfield 306 (Fig. 3) may not be needed for such communications.

In some demonstrative aspects, a bit, which may be "saved" from the UL FEC Coding Type subfield 306 (Fig. 3), may be relocated to UL MCS subfield 206, for example, to be used in transmissions of unequal MCS information.

In some demonstrative aspects, a bit of a 1-bit reserved bit subfield 310 (Fig. 3) of user info field 300 (Fig. 3) may be repurposed for MCS signaling, for example, as part of UL MCS subfield 206, e.g., as described below.

In some demonstrative aspects, a bit of the 3 additional bits assigned to UL MCS subfield 206 may be obtained from the reserved bit subfield 310 (Fig. 3). For example, the reserved bit subfield 310 (Fig. 3) may be unused for any purpose, and may be relocated to UL MCS subfield 206, for example, to be used for transmission of unequal MCS information.

In some demonstrative aspects, at least one bit of the 6-bit SS Allocation/RA-RU Information subfield 312 (Fig. 3) of user info field 300 (Fig. 3) may be repurposed for MCS signaling, for example, as part of UL MCS subfield 206, e.g., as described below.

In some demonstrative aspects, a bit of the 3 additional bits assigned to UL MCS subfield 206 may be obtained from the SS Allocation/RA-RU Information subfield 312 (Fig. 3).

For example, the SS Allocation/RA-RU Information subfield 312 (Fig. 3) may be designed according to the user info field format 300 (Fig. 3) to include 6 bits to support up to 4 spatial streams for each user, and up to 8 spatial streams in total.

For example, the first 4 bits of the SS Allocation/RA-RU Information subfield 312 (Fig. 3) may be used to indicate a starting spatial stream, and the remaining 2 bits of the SS Allocation/RA-RU Information subfield 312 (Fig. 3) may be used indicate a number of spatial streams assigned to a user.

In some demonstrative aspects, it may be noted that a maximum value of the starting spatial stream may be 7 and, for example, values above 7 may be reserved, e.g., when the maximum allowed number of spatial streams is 8. Accordingly, 3 bits, e.g., rather than 4 bits, may be sufficient to indicate all possible starting spatial streams up to the value of 7.

In some demonstrative aspects, a bit may be "saved" from the SS Allocation/RA-RU Information subfield 312 (Fig. 3), for example, by reducing the bit-size of the starting spatial stream value from 4 bits to 3 bits. For example, this "saved" bit may be relocated to UL MCS subfield 206, for example, to be used for transmissions of unequal MCS information.

In some demonstrative aspects, it may be noted that, for example, in many use cases and/or implementations, one or more additional bits may be "saved" from the SS Allocation/RA-RU Information subfield 312 (Fig. 3), for example, in case one or more specifications regarding the maximum number of total spatial streams and/or the number of spatial streams for each user may be relaxed, e.g., as described below.

For example, the total number of spatial streams may be up to 8, and each user may have up to 4 spatial streams, e.g., in accordance with the *IEEE 802.11be Specification.*

According to this example, 1 bit out of the 6 bits of the SS Allocation/RA-RU Information subfield 312 (Fig. 3) may be repurposed, for example, for MCS signaling, e.g., as part of UL MCS subfield 206.For example, 5 bits of the SS Allocation/RA-RU Information subfield 312 (Fig. 3) may be enough to satisfy up to 8 total spatial streams and up to 4 spatial streams for each user.

However, for example, in most cases, the total number of spatial streams may be lower than 4, and/or each user may have, e.g., may only have, less than or equal to 2 spatial streams.

For example, it may be enough to use 3 bits to cover a relaxed requirement to support up to 4 total spatial streams and up to 2 spatial streams for each user. According to this example, it may be enough to use 2 bits to indicate a starting spatial stream, and one bit to indicate a number of spatial streams of a user.

For example, the remaining 3 bits out of the 6 bits of the SS Allocation/RA-RU Information subfield 312 (Fig. 3) may be repurposed, for example, for MCS signaling, e.g., as part of UL MCS subfield 206.

In some demonstrative aspects, more than 1 bit may be repurposed from the 6-bit SS Allocation/RA-RU Information subfield (Fig. 3), for example, such that SS Allocation/RA-RU Information subfield 208 may be configured to include less than 5 bits.

For example, SS Allocation/RA-RU Information subfield 208 may be configured as a 4-bit field, which may utilize 4 bits to indicate a spatial stream allocation, e.g., similar to a SS allocation signaling implemented by a 4-bit Spatial Configuration subfield, e.g., in accordance with an *IEEE 802.11ax Specification.*

In some demonstrative aspects, as shown in Fig. 2, user info field format 200 may be configured to include UL MCS subfield 206 immediately after RU allocation subfield 204, for example, by excluding the 1-bit UL FEC coding type field 306 (Fig. 3), e.g., as described above.

In other aspects, user info field format 200 may be configured to include the 1-bit UL FEC coding type field 306 (Fig. 3), for example, between RU allocation subfield 204 and UL MCS subfield 206, e.g., as described below.

For example, the 1-bit UL FEC coding type subfield 306 (Fig. 3) may be included in user info field format 200, for example, to indicate which type of LDPC, e.g., conventional LDPC or lifted LDPC, should be used in an uplink transmission.

According to this example, 2 bits, e.g., instead of 1 bit, may be repurposed from the SS Allocation/RA-RU Information subfield 312 (Fig. 3), e.g., to make up for the bit used by the UL FEC coding type subfield 306 (Fig. 3).

For example, as a result, SS Allocation/RA-RU Information subfield 208 may be configured as a 4-bit field.

In some demonstrative aspects, UL MCS subfield 206 may be configured to utilize 7 bits, which may include 4 bits, which may be obtained from 4-bit UL EHT-MCS subfield 308 (Fig. 3), 1 bit obtained from the UL FEC Coding Type subfield 306 (Fig. 3), one bit obtained from the reserved subfield 310 (Fig. 3), and/or one bit obtained from the SS Allocation/RA-RU Information subfield 312 (Fig. 3), e.g., as described above.

For example, as may be seen from a comparison between the user info field format 200 (Fig. 2) and the user info field format 300 (Fig. 3), UL FEC Coding Type subfield 306 (Fig. 3) and reserved bit subfield 310 (Fig. 3) may be excluded from the user info field format 200 (Fig. 2), for example, as their bits may be relocated to UL MCS subfield 206, for example, to deliver unequal MCS information, e.g., as described above.

For example, as may be seen from a comparison between the user info field format 200 (Fig. 2) and the user info field format 300 (Fig. 3), a bit-size of SS Allocation/RA-RU Information subfield 208 (Fig. 2) may be shorter than the bit-size of SS Allocation/RA-RU Information subfield 312 (Fig. 3).

For example, SS Allocation/RA-RU Information subfield 208 (Fig. 2) may be configured as a 5-bit subfield (as shown in Fig. 2), or as a 4-bit subfield, which may be shorter than the 6-bit SS Allocation/RA-RU Information subfield 312 (Fig. 3), e.g., as described above.

For example, one bit or two bits, which may be "saved" from the SS Allocation/RA-RU Information subfield 312 (Fig. 3), may be repurposed as part of UL MCS subfield 206, for example, to support an indication of unequal MCS, e.g., as described above.

In other aspects, one or more bits of the UL MCS subfield 206 may be configured based on bits of any other additional or alternative subfields.

In some demonstrative aspects, the 7-bit UL MCS subfield 206 may be utilized to carry the MCS information of up to two MCSs, e.g., as described below.

In some demonstrative aspects, the 7-bit UL MCS subfield 206 may be implemented as a "UHR-MCS subfield", e.g., in accordance with an *IEEE 802.11bn (Ultra High Reliability (UHR) Specification).*

In some demonstrative aspects, UL MCS subfield 206 may be configured according to one or more designs, which may be configured to utilize the 7 bits of UL MCS subfield 206 to support signaling of up to two MCSs per user, e.g., as described below.

In some demonstrative aspects, UL MCS subfield 206 may be configured according to an UL MCS subfield design, which may use the first 4 bits of UL MCS subfield 206 to indicate a first MCS, e.g., as described below.

In some demonstrative aspects, UL MCS subfield 206 may be configured according to an UL MCS subfield design, which uses the remaining 3 bits of UL MCS subfield 206, e.g., the 3 bits relocated from the UL FEC Coding Type subfield, the reserved bit subfield, and the SS Allocation/RA-RU Information subfield, to indicate a second MCS, e.g., as described below.

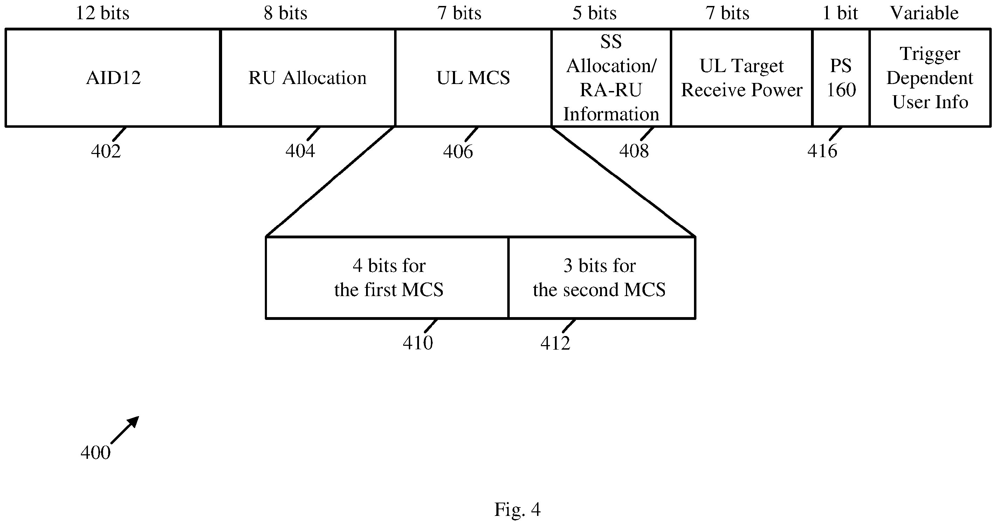

Reference is made to Fig. 4, which schematically illustrates a format of a user info field 400, in accordance with some demonstrative aspects.

For example, user info field 400 may include a user field format, which may be included in a trigger frame.

For example, user info field 400 may include a user field format, which may be configured to carry information for a user, for example, to indicate information for a TB UL transmission from the user.

In some demonstrative aspects, one or more subfields of user info field 200 (Fig. 2) may be configured according to one or more subfields of user info field 400.

For example, device 102 (Fig. 1) may be configured to generate, process, and/or transmit a trigger frame, which may include user info field 400, for example, to provide user-specific information for a user to transmit a TB UL transmission.

For example, device 140 (Fig. 1) and/or device 160 (Fig. 1) may be configured to receive and/or process a trigger frame including user info field 400, for example, to identify user specific information corresponding to a user to perform a TB UL transmission.

In some demonstrative aspects, as shown in Fig. 4, user info field 400 may include a STA-ID subfield 402 to identify the user to which the user info field 400 corresponds.

In some demonstrative aspects, as shown in Fig. 4, user info field 400 may include a plurality of subfields, e.g., including an RU allocation subfield 404 and a PS160 subfield 416, which may be configured to indicate to the user a size and/or a location of an RU allocated to the user.

In some demonstrative aspects, as shown in Fig. 4, user info field 400 may include an UL MCS subfield 406, for example, after the RU allocation subfield 404.

In some demonstrative aspects, UL MCS subfield 406 may be configured to indicate an assignment of a plurality of MCSs for the user identified by the STA-ID subfield 402.

In some demonstrative aspects, as shown in Fig. 4, user info field 400 may include an SS allocation/RA-RU information subfield 408, for example, after the UL MCS subfield 406.

In some demonstrative aspects, SS allocation/RA-RU information subfield 408 may be configured to indicate a SS allocation for the user.

In some demonstrative aspects, as shown in Fig. 4, SS allocation/RA-RU information subfield 408 may have a size of 5 bits.

For example, 3 bits of SS allocation/RA-RU information subfield 408 may be configured to indicate a starting SS, and 2 remaining bits of SS allocation/RA-RU information subfield 408 may be configured to indicate a number of spatial streams, e.g., as described above.

In some demonstrative aspects, UL MCS subfield 406 may include a first MCS value 410 to indicate a first MCS to be assigned to a first UL resource of the RU allocation for the user, and a second MCS value 412 to indicate a second MCS to be assigned to a second UL resource of the RU allocation for the user, e.g., as described below.

In some demonstrative aspects, as shown in Fig. 4, UL MCS subfield 406 may have a size of 7 bits.

In some demonstrative aspects, as shown in Fig. 4, UL MCS subfield 406 may include 4 bits, e.g., including 4 first bits of UL MCS subfield 406, which may be configured to represent the first MCS value 410, e.g., to convey information of the first MCS for the user.

In some demonstrative aspects, as shown in Fig. 4, UL MCS subfield 406 may include 3 bits, e.g., including the 3 remaining bits of UL MCS subfield 406, which may be configured to represent the second MCS value 412.

In some demonstrative aspects, the second MCS value 412, e.g., as represented the last three bits of UL MCS field 406, may be configured to indicate the second MCS, for example, based on the first MCS value 410, e.g., as described below.

In some demonstrative aspects, the second MCS value 412, e.g., as represented the last three bits of UL MCS field 406, may be configured to indicate a difference between a modulation order of the first MCS and a modulation order of the second MCS, e.g., as described below.

In some demonstrative aspects, the second MCS value 412, e.g., as represented the last three bits of UL MCS field 406, may be configured to indicate the second MCS, for example, based on a predefined mapping of a plurality of predefined second MCSs to a plurality of combinations between a plurality of predefined first MCS values and a plurality of predefined second MCS values, e.g., as described below.

In some demonstrative aspects, the first MCS value 410 may be configured to represent an index of the first MCS for the user, e.g., the MCS with a higher modulation order than the second MCS. For example, the first MCS value 410 may include an MCS index of the first MCS. For example, the index of the first MCS may be configured to indicate both modulation and coding rate information for the first MCS.

In some demonstrative aspects, the first MCS and the second MCS may share the same coding rate. For example, the unequal MCSs for the user may defer by their modulations, e.g., in accordance with an *IEEE 802.11be Specification.*

In some demonstrative aspects, the second MCS value 412, e.g., as represented the last three bits of UL MCS field 406, may be utilized to indicate a modulation order deduction of the second MCS, for example, compared to the first MCS, e.g., rather than the MCS index of the second MCS.

For example, an MCS index may be configured to indicate a modulation order from a plurality of predefined modulation orders, e.g., including 7 modulation orders, for example, including Binary Phase-Shift Keying (BPSK), Quadrature Phase Shift Keying (QPSK), 16 Quadrature Amplitude Modulation (QAM) (16-QAM), 64-QAM, 256-QAM, 1024-QAM, and/or 4096-QAM.

For example, in case of unequal MCS, a largest modulation order deduction may occur when the first MCS includes the 4096-QAM modulation, and the second MCS includes the BPSK modulation. According to this example, the largest modulation order deduction may include a deduction of 6 modulation orders, e.g., from 4096-QAM to BPSK. Accordingly, 3 bits may be sufficient to present all possibilities of the modulation order deduction between the first MCS and the second MCS.

For example, a case of equal MCS may be represented by a 0 modulation order deduction between the first MCS and the second MCS. For example, the second MCS value 412, e.g., as represented the last three bits of UL MCS field 406, may be set to "0", for example, when the second MCS is equal to the first MCS.

In some demonstrative aspects, UL MCS subfield 406 may be configured to indicate the first MCS and the second MCS, for example, according to their modulation orders.

In some demonstrative aspects, the first MCS value 410, e.g., as represented the first four bits of UL MCS subfield 406, may be configured based on the first MCS, which may have the higher modulation order, and the second MCS value 412, e.g., as represented the last three bits of UL MCS subfield 406, may be configured based on the second MCS, which may have the lower modulation order.

In other aspects, the first MCS may be equal to the second MCS.

In some demonstrative aspects, the second MCS value 412, e.g., as represented by the last three bits of UL MCS subfield 406, may be configured to represent the modulation order deduction (gap) between the first MCS and the second MCS, for example, according to a predefined mapping of a plurality of predefined second MCSs to a plurality of combinations between a plurality of predefined first MCS modulation values and a plurality of predefined second MCS values, e.g., as follows:

**Table 1**

| | 3 Bits | | | | | | | |
|---|---|---|---|---|---|---|---|---|
| | 000 | 001 | 010 | 011 | 100 | 101 | 110 | 111 |
| First MCS's Modulation | Second MCS's Modulation | | | | | | | |
| BPSK | BPSK | | | | | | | |
| QPSK | QPSK | BPSK | | | | | | |
| 16-QAM | 16-QAM | QPSK | BPSK | | | | | |
| 64-QAM | 64-QAM | 16-QAM | QPSK | BPSK | | | | |
| 256-QAM | 256-QAM | 64-QAM | 16-QAM | QPSK | BPSK | | | |
| 1024-QAM | 1024-QAM | 256-QAM | 64-QAM | 16-QAM | QPSK | BPSK | | |
| 4096-QAM | 4096-QAM | 1024-QAM | 256-QAM | 64-QAM | 16-QAM | QPSK | BPSK | |

For example, as shown in Table 1, the second MCS value 412, e.g., as represented the last three bits of UL MCS subfield 406, may be set to "000", for example, to indicate a case of equal MCS, e.g., when the first MCS and the second MCS have a same modulation order.

For example, according to Table 1, other 3-bit binary numbers, e.g., except the entry '000', may indicate the modulation order deduction (gap) between the first MCS and the second MCS.

For example, as shown in line 6 of Table 1, the second MCS value 412, e.g., as represented the last three bits of UL MCS subfield 406, may be set to the value '010', for example, in case the modulation of the second MCS is 2 orders lower than that the modulation of the first MCS, for example, in case a modulation of the first MCS is 1024-QAM and a modulation of the second MCS is 64-QAM.

Referring back to Fig. 2, in some demonstrative aspects, UL MCS subfield 206 may be configured according to an UL MCS subfield design, which may be configured to support indication, e.g., direct indication, of a combination of the first MCS and the second MCS for the user, e.g., as described below.

In some demonstrative aspects, UL MCS subfield 206 may include an MCS combination value, which may be configured to indicate both the first MCS and the second MCS for the user, e.g., as described below.

In some demonstrative aspects, the MCS combination value may be configured to indicate both the first MCS and the second MCS for the user, for example, based on a predefined mapping of a plurality of predefined MCS-combination values to a plurality of predefined combinations of first and second MCSs, e.g., as described below.

In some demonstrative aspects, the plurality of predefined MCS-combination values may be configured to cover substantially all possible combinations of MCSs for two spatial streams, for example, using a 7-bit value, for example, represented by the 7 bits of UL MCS subfield 206, e.g., as described below.

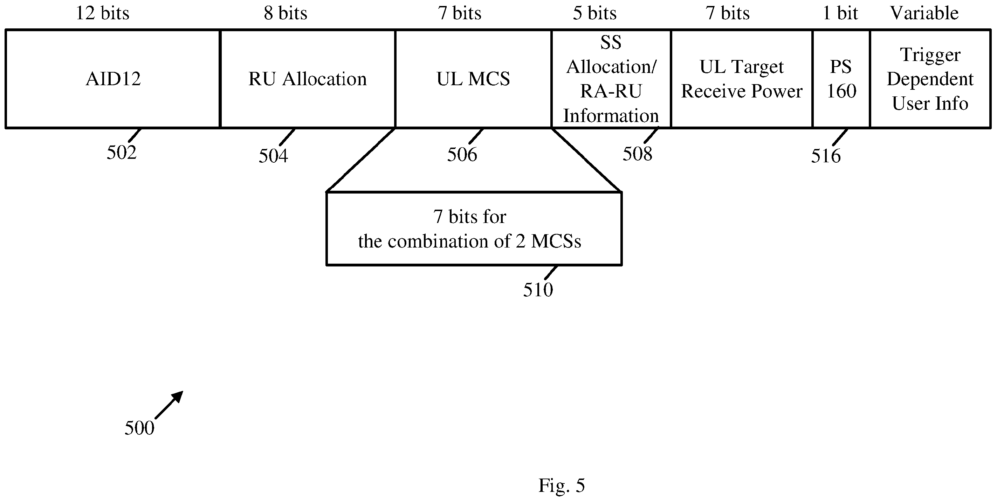

Reference is made to Fig. 5, which schematically illustrates a format of a user info field 500, in accordance with some demonstrative aspects.

For example, user info field 500 may include a user field format, which may be included in a trigger frame.

For example, user info field 500 may include a user field format, which may be configured to carry information for a user, for example, to indicate information for a TB UL transmission from the user.

In some demonstrative aspects, one or more subfields of user info field 200 (Fig. 2) may be configured according to one or more subfields of user info field 500.

For example, device 102 (Fig. 1) may be configured to generate, process, and/or transmit a trigger frame, which may include user info field 500, for example, to provide user-specific information for a user to transmit a TB UL transmission.

For example, device 140 (Fig. 1) and/or device 160 (Fig. 1) may be configured to receive and/or process a trigger frame including user info field 500, for example, to identify user specific information corresponding to a user to perform a TB UL transmission.

In some demonstrative aspects, as shown in Fig. 5, user info field 500 may include a STA-ID subfield 502 to identify the user to which the user info field 500 corresponds.

In some demonstrative aspects, as shown in Fig. 5, user info field 500 may include a plurality of subfields, e.g., including an RU allocation subfield 504 and a PS160 subfield 516, which may be configured to indicate to the user a size and/or a location of an RU allocated to the user.

In some demonstrative aspects, as shown in Fig. 5, user info field 500 may include an UL MCS subfield 506, for example, after the RU allocation subfield 504.

In some demonstrative aspects, UL MCS subfield 506 may be configured to indicate an assignment of a plurality of MCSs for the user identified by the STA-ID subfield 502.

In some demonstrative aspects, as shown in Fig. 5, user info field 500 may include an SS allocation/RA-RU information subfield 508, for example, after the UL MCS subfield 506.

In some demonstrative aspects, SS allocation/RA-RU information subfield 508 may be configured to indicate a SS allocation for the user.

In some demonstrative aspects, as shown in Fig. 5, SS allocation/RA-RU information subfield 508 may have a size of 5 bits.

For example, 3 bits of SS allocation/RA-RU information subfield 508 may be configured to indicate a starting SS, and 2 remaining bits of SS allocation/RA-RU information subfield 508 may be configured to indicate a number of spatial streams, e.g., as described above.

In some demonstrative aspects, as shown in Fig. 5, UL MCS subfield 506 may have a size of 7 bits.

In some demonstrative aspects, UL MCS subfield 506 may include a 7-bit MCS-combination value 510, e.g., represented by the 7 bits of UL MCS subfield 506, configured to indicate both a first MCS and a second MCS assigned to the user identified by the STA-ID subfield 502.

In some demonstrative aspects, 7-bit MCS-combination value 510 may be configured to indicate both the first MCS and the second MCS, for example, based on a predefined mapping of a plurality of predefined MCS-combination values to a plurality of predefined combinations of first and second MCSs.

For example, 7 bits of the UL MCS subfield 506 may be configured to indicate an index of a combination with two MCSs.

For example, two unequal MCSs of the user may share the same coding rate, and may have different modulations. For example, it may be defined that a modulation order of the first MCS may, e.g., may always, be larger than or equal to a modulation order of the second MCS.

For example, the first MCS may be, e.g., will be, assigned to a first spatial stream or a frequency channel with better wireless conditions and/or a higher Signal-to-Interference-plus-Noise Ratio (SINR), e.g., as described below.

For example, an index of a combination with two MCSs may be configured to indicate a combination of modulation orders from a plurality of predefined combinations of modulation orders, e.g., including 7 modulation orders, for example, including BPSK, QPSK, 16-QAM, 64-QAM, 256-QAM, 1024-QAM, and/or 4094-QAM modulations.

For example, the plurality of predefined combinations of first and second MCSs, e.g., representing all possible modulation combinations, may be defined, e.g., as follows:

**Table 2**

| First MCS's Modulation | Potential Modulations of Second MCS | | | | | | | Total Entries |
|---|---|---|---|---|---|---|---|---|
| BPSK | BPSK | | | | | | | 1 |
| QPSK | BPSK | QPSK | | | | | | 2 |
| 16-QAM | BPSK | QPSK | 16-QAM | | | | | 3 |
| 64-QAM | BPSK | QPSK | 16-QAM | 64-QAM | | | | 4 |
| 256-QAM | BPSK | QPSK | 16-QAM | 64-QAM | 256-QAM | | | 5 |
| 1024-QAM | BPSK | QPSK | 16-QAM | 64-QAM | 256-QAM | 1024-QAM | | 6 |
| 4096-QAM | BPSK | QPSK | 16-QAM | 64-QAM | 256-QAM | 1024-QAM | 4096-QAM | 7 |

In one example, a combination of two different modulations in Table 2 may indicate an unequal MCS assignment of two different MCSs for two respective spatial streams.

In one example, a combination of the same two modulations in Table 2 may indicate an equal MCS assignment of the same MCS for two spatial streams.

For example, as shown in line 5 of Table 2, UL MCS subfield 506 may be set to indicate that the modulations of the first MCS and the second MCS are both 256-QAM. Accordingly, this setting may indicate an assignment of equal MCS, for example, as the first MCS and the second MCS share the same modulation and the same coding rate.

For example, as shown in line 6 of Table 2, UL MCS subfield 506 may be set to indicate a 1024-QAM modulation for the first MCS and a 16-QAM modulation for the second MCS. Accordingly, this setting may indicate an assignment of unequal MCS, for example, as the first MCS and the second MCS have different modulations with the same coding rate.

In some demonstrative aspects, as shown in Table 2, there may be a total of 28 possible different modulation combinations.

In some demonstrative aspects, there may be 4 different coding rates, e.g., LDPC coding rates, for example, including coding rates of 1/2, 2/3, 3/4, and 5/6.

In some demonstrative aspects, there may be up to 4×28=112 different MCS combinations of two MCSs, e.g., sharing the same coding rate.

In some demonstrative aspects, configuring the UL MCS subfield 506 to have a size of 7 bits may provide a technical solution to support up to 128 values (indexes) corresponding to up to 128 different MCS combinations. Accordingly, configuring UL MCS subfield 506 to include a 7-bit MCS-combination value may be sufficient to support all possible 112 MCS combinations.

In some demonstrative aspects, there may be no modulation order deduction (gap) limitation between modulation orders of the first MCS and the second MCS, e.g., in accordance with the *IEEE 802.11be Specification.* For example, UL MCS subfield 506 may be set to indicate a 4096-QAM modulation for the first MCS and a BPSK modulation for the second MCS. Accordingly, this setting may have a maximum modulation order deduction of 6 modulation orders.

In some demonstrative aspects, it may be defined that the maximum number of spatial streams is limited to 8, and/or that each user may have up to 4 spatial streams. Accordingly, following the afore-mentioned configurations, a 7-bit MCS-combination value in UL MCS subfield 506 may be sufficient to cover all 128 possible MCS combinations, e.g., as shown in Table 2.

Referring back to Fig. 2, in some demonstrative aspects, UL MCS subfield 206 may be configured according to a UL MCS subfield design, which includes a coding-rate value and a modulation value, e.g., as described below.

In some demonstrative aspects, UL MCS subfield 206 may be configured to utilize a first plurality of bits, for example, 2 bits, e.g., the first 2 bits of UL MCS subfield 206, to represent a coding-rate value, which may indicate a same coding rate for both the first MCS and the second MCS of for the user, e.g., as described below.

In some demonstrative aspects, UL MCS subfield 206 may be configured to utilize a first plurality of bits, for example, 5 bits, e.g., the last 5 bits of UL MCS subfield 206, to represent a modulation value, which may indicate a combination of a modulation of the first MCS and a modulation of the second MCS, e.g., as described below.

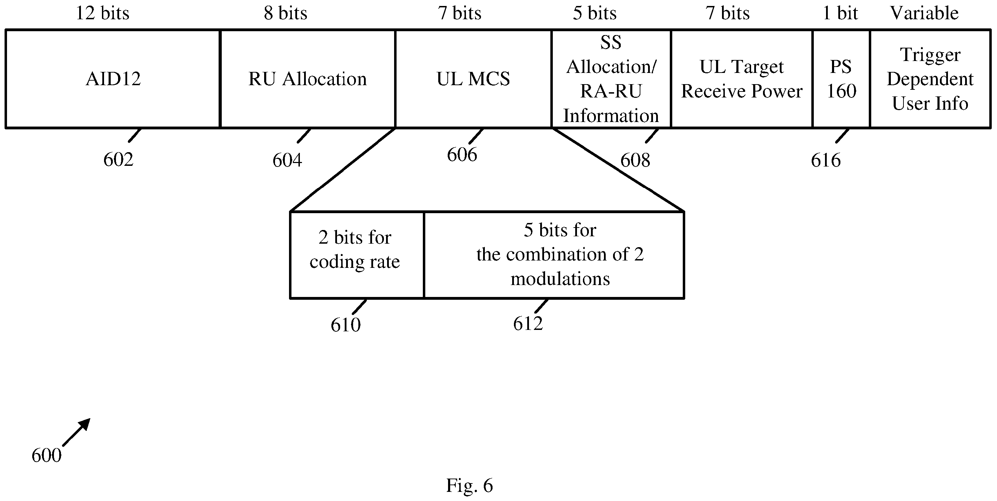

Reference is made to Fig. 6, which schematically illustrates a format of a user info field 600, in accordance with some demonstrative aspects.

For example, user info field 600 may include a user field format, which may be included in a trigger frame.

For example, user info field 600 may include a user field format, which may be configured to carry information for a user, for example, to indicate information for a TB UL transmission from the user.

In some demonstrative aspects, one or more subfields of user info field 200 (Fig. 2) may be configured according to one or more subfields of user info field 600.

For example, device 102 (Fig. 1) may be configured to generate, process, and/or transmit a trigger frame, which may include user info field 600, for example, to provide user-specific information for a user to transmit a TB UL transmission.

For example, device 140 (Fig. 1) and/or device 160 (Fig. 1) may be configured to receive and/or process a trigger frame including user info field 600, for example, to identify user specific information corresponding to a user to perform a TB UL transmission.

In some demonstrative aspects, as shown in Fig. 6, user info field 600 may include a STA-ID subfield 602 to identify the user to which the user info field 600 corresponds.

In some demonstrative aspects, as shown in Fig. 6, user info field 600 may include a plurality of subfields, e.g., including an RU allocation subfield 604 and a PS160 subfield 616, which may be configured to indicate to the user a size and/or a location of an RU allocated to the user.

In some demonstrative aspects, as shown in Fig. 6, user info field 600 may include an UL MCS subfield 606, for example, after the RU allocation subfield 604.

In some demonstrative aspects, UL MCS subfield 606 may be configured to indicate an assignment of a plurality of MCSs for the user identified by the STA-ID subfield 602.

In some demonstrative aspects, as shown in Fig. 6, user info field 600 may include an SS allocation/RA-RU information subfield 608, for example, after the UL MCS subfield 606.

In some demonstrative aspects, SS allocation/RA-RU information subfield 608 may be configured to indicate a SS allocation for the user.

In some demonstrative aspects, as shown in Fig. 6, SS allocation/RA-RU information subfield 608 may have a size of 5 bits.

For example, 3 bits of SS allocation/RA-RU information subfield 608 may be configured to indicate a starting SS, and 2 remaining bits of SS allocation/RA-RU information subfield 608 may be configured to indicate a number of spatial streams, e.g., as described above.

In some demonstrative aspects, as shown in Fig. 6, UL MCS subfield 606 may have a size of 7 bits.

In some demonstrative aspects, UL MCS subfield 606 may include a coding-rate value 610, e.g., represented by 2 bits of UL MCS subfield 606, which may be configured to indicate a same coding rate for both a first MCS and a second MCS assigned to the user identified by the STA-ID subfield 602.

In some demonstrative aspects, UL MCS subfield 606 may include a modulation value 612, e.g., represented by 5 bits of UL MCS subfield 606, which may be configured to indicate a modulation of the first MCS and a modulation of the second MCS for the user, e.g., as described below.

For example, the first 2 bits of UL MCS subfield 606 may be configured to indicate the coding rate to be shared by both the first MCS and the second MCS for the user.

In some demonstrative aspects, the modulation value 612 may be configured to indicate both the modulation of the first MCS and the modulation of the second MCS, for example, based on a predefined mapping of a plurality of predefined modulation values to a plurality of predefined combinations of first and second modulations.

For example, the remaining 5 bits of UL MCS subfield 606, e.g., which may be after the first 2 bits, may be configured to indicate the combination of two modulations, e.g., a modulation of the first MCS and a modulation of the second MCS.

For example, a plurality of possible coding rates for the first and second MCSs may include four different coding rates. According to this example, the first 2 bits of UL MCS subfield 606 may be sufficient to indicate the coding-rate value 610 covering indexes of the four possible coding rates.

For example, a plurality of possible combinations of the modulation values for the first and second MCSs may include 28 possible modulation combinations, e.g., given a coding rate, for example, as described above with reference to Table 2.

For example, configuring the modulation value 612 to have a size of 5 bits may provide a technical solution to support up to 32 modulation combination indexes. Accordingly, configuring modulation value 612 to have a size of 5 bits may be sufficient to support all possible 28 modulation combinations.

For example, by reading all 7 bits of UL MCS subfield 606, the user may be able to obtain a coding rate for the user, for example, through the coding-rate value 610 represented by the first 2 bits 610 of UL MCS subfield 606; and may be able to obtain two modulations of two MCSs for the user, for example, through the modulation value 612 represented by the remaining 5 bits of UL MCS subfield 606.

Referring back to Fig. 1, in some demonstrative aspects, device 102, device 140, and/or device 160 may be configured to implement an MCS signaling mechanism, which may be configured to support a user in identifying unequal MCS allocations, e.g., as described below.

For example, the user (also referred to as "user STA") may identify a user field, e.g., user info field 200 (Fig. 2), in a trigger frame received from an AP, for example, by finding an AID12 subfield, e.g., AID12 subfield 202 (Fig. 2), corresponding to the user.

For example, the user may, e.g., will, know positions of all bits in its user info field, for example, in case each user info field in the trigger frame may have a same bit length, and a length of each subfield in the user info field may be predefined.

For example, the user may obtain information regarding a size and/or location of the user's RU/MRU, for example, after identifying its user info field through the AID12 subfield, e.g., AID12 subfield 202 (Fig. 2). For example, the user may determine the information regarding the size and/or location of the user's RU/MRU, for example, based on information in an RU Allocation subfield, e.g., RU Allocation subfield 204 (Fig. 2), along with a PS160 subfield, e.g., PS160 subfield 210 (Fig. 2) in the user info field, an UL BW subfield, which may be included in a common info field, and/or an UL BW Extension subfield, which may be included in a special user info field.

For example, the user may, e.g., will, determine whether the RU/MRU for the user is located on a primary channel or a secondary channel, e.g., based on information in the RU Allocation subfield.

For example, the user may process an UL MCS subfield, e.g., an "UL UHR-MCS subfield",) in the user info field, e.g., UL MCS subfield 206 (Fig. 2), to obtain information regarding one or more MCSs for the user. For example, the UL MCS subfield may support equal MCS, and unequal MCS with up to 2 MCSs.

For example, the user may obtain spatial stream information from an SS Allocation/RA-RU Information subfield in the user info field, e.g., SS Allocation/RA-RU Information subfield 208 (Fig. 2). For example, the user may identify spatial streams allocated to the user, for example, based on the spatial stream information.

In some demonstrative aspects, the user may process the user info field for the user for example, to determine information regarding its MCS assignment, RU/MRU allocations, and/or spatial streams allocations.

For example, the user may process the MCS assignment information, e.g., of UL MCS subfield 206 (Fig. 2), for example, to identify whether unequal MCSs are assigned to the user.

In some demonstrative aspects, device 102, device 140, and/or device 160 may be configured to implement an unequal MCS mechanism, which may be configured to support allocation of unequal MCSs across a plurality of spatial streams, e.g., as described below.

In some demonstrative aspects, it may be defined that only unequal MCSs across spatial streams may be supported. Accordingly, it may be defined that an MCS with a higher modulation order is to be assigned to a spatial stream with a smaller index.

In one example, in case an unequal MCS allocation includes a 64QAM MCS and a QPSK MCS, then the 64QAM MCS may be assigned to a first spatial stream (stream 1), and the QPSK MCS may be assigned to a second spatial stream (stream 2).

In some demonstrative aspects, device 102, device 140, and/or device 160 may be configured to implement an unequal MCS mechanism, which may be configured to support allocation of unequal MCSs across a plurality of a plurality of frequency sub-channels, for example, a plurality of RUs, e.g., as described below.

In some demonstrative aspects, it may be defined that only unequal MCSs across frequency may be supported. Accordingly, it may be defined that an MCS with a highest modulation order is to be assigned to an RU, e.g., within a MRU, or a frequency sub-channel, e.g., within a frequency channel, that is most primary among the assigned RUs or sub-channels.

For example, the user may be assigned a first RU in a secondary 40 MHz sub-channel of a primary 80 MHz sub-channel, and a second RU in a secondary 80 MHz sub-channel. According to this example, a first MCS, e.g., with a higher modulation order, may be assigned to the first RU in the secondary 40 MHz sub-channel, and a second MCS, e.g., with a lower modulation order, may be assigned to the second RU in the secondary 80 MHz sub-channel.

In some demonstrative aspects, device 102, device 140, and/or device 160 may be configured to implement an unequal MCS mechanism, which may be configured to support allocation of unequal MCSs across both spatial streams and frequency sub-channels, e.g., as described below.

In some demonstrative aspects, it may be defined that unequal MCSs may be supported across both spatial streams and frequency subchannels or RUs, e.g., as described below.

In some demonstrative aspects, a user (also referred to as "unequal MCS user"), which may have an unequal MCS allocation, may have an allocated RU/MRU, which is across a primary sub-channel and a secondary sub-channel. For example, the unequal MCS user may be assigned, e.g., may only be assigned, with one spatial stream.

In some demonstrative aspects, it may be defined that two unequal MCSs for the user may be applied across one or more frequencies of its RU, or RUs within an MRU.

For example, it may be defined that a first MCS of the two MCSs, which has a higher modulation order from the two unequal MCSs, may be applied to RU/MRU portions located on the primary sub-channel.

For example, it may be defined that a second MCS of the two MCSs, which has a lower modulation order from the two unequal MCSs, may be applied to RU/MRU portions located on the secondary sub-channel.

For example, the primary sub-channel and the secondary sub-channel may adopt different CCA methods, e.g., one sub-channel may adopt a preamble detect CCA, while another sub-channel may adopt an energy detect CCA. These different CCA methods may have different sensitivities.

In one example, the sensitivity threshold on a 20MHz primary sub-channel may be -82dBm, e.g., according to a preamble detect CCA method, and a sensitivity threshold on a 20MHz secondary sub-channel may be -62dBm, e.g., according to an energy detect CCA method.

For example, these different sensitivity thresholds may result in signal-to-interference-and noise ratio (SINR) imbalance between the primary and secondary channels.

For example, the primary sub-channel may have a better SINR condition compared to the secondary sub-channel.

For example, the MCS with the higher modulation order may be applied to the RU/MRU portions located on the primary sub-channel, which may have the better SINR condition compared to the secondary sub-channel.

In some demonstrative aspects, the unequal MCS user may have an allocated RU/MRU, which is not across a primary sub-channel and a secondary sub-channel. For example, the RU/MRU of the unequal MCS user may only be located on a primary sub-channel or a secondary sub-channel, while multiple spatial streams may be allocated to this user.

In some demonstrative aspects, it may be defined that the user's two unequal MCSs may be applied across the user's spatial streams.

For example, a first MCS, which has a higher modulation order from the two unequal MCSs, may be applied to a first spatial stream (or first several spatial streams) allocated to the user.

For example, a second MCS, which has a lower modulation order from the two unequal MCSs, may be applied to one or more second spatial streams, e.g., to the rest of the user's spatial streams.

For example, a beamforming gain on the first spatial stream (or the first several spatial streams) may be higher than a beamforming gain on the second spatial streams. As a result, the first spatial stream (or the first several spatial streams) may have better SNR conditions, e.g., compared to the SNR conditions of the second spatial streams.

In some demonstrative aspects, the unequal MCS user may have an allocated RU/MRU, which is across a primary channel and a secondary channel, while multiple spatial streams may be allocated to this user.

In some demonstrative aspects, it may be defined that the user's two unequal MCSs may be allocated according to a priority between space and frequency, e.g., for reducing complexity.

For example, it may be defined that the unequal MCSs may be applied, e.g., may only be applied, across either spatial streams or frequency RUs, for example, instead of being applied on both spatial streams and frequency RUs.

In one example, it may be mandated that the unequal MCSs are to be applied across spatial streams, for example, since an SINR gap between spatial streams may be more predictable than an SINR gap between frequency RUs.

In another example, it may be defined that frequency unequal MCS may be given a higher priority.

For example, it may be defined that two unequal MCSs may be applied across frequency, e.g., different RUs, for example, to improve an issue of an SINR imbalance over frequencies. For example, an SINR imbalance over spatial streams may be resolved, for example, by an MCS refinement mechanism.

In some demonstrative aspects, an unequal MCS signaling mechanism may be configured to utilize one or more additional signaling and/or bits, which may be added, for example, to indicate, e.g., directly indicate, that the two unequal MCSs are to be applied to spatial streams, or to frequencies.

For example, user info fields may be configured to include a 1-bit signaling subfield, for example, to indicate the use of an unequal MCS.

For example, the 1-bit signaling may be set to a first value, e.g., 0, to indicate that the unequal MCS is to be applied across spatial streams.

For example, the 1-bit signaling may be set to a second value, e.g., 1, to indicate that the unequal MCS is applied across frequency.

In one example, the 1-bit signaling may be implemented to provide a technical comprehensive solution, which may be defined to support unequal MCSs across both space and frequency, for example, even at the cost of higher implementation complexity and more indication overhead in the signaling.

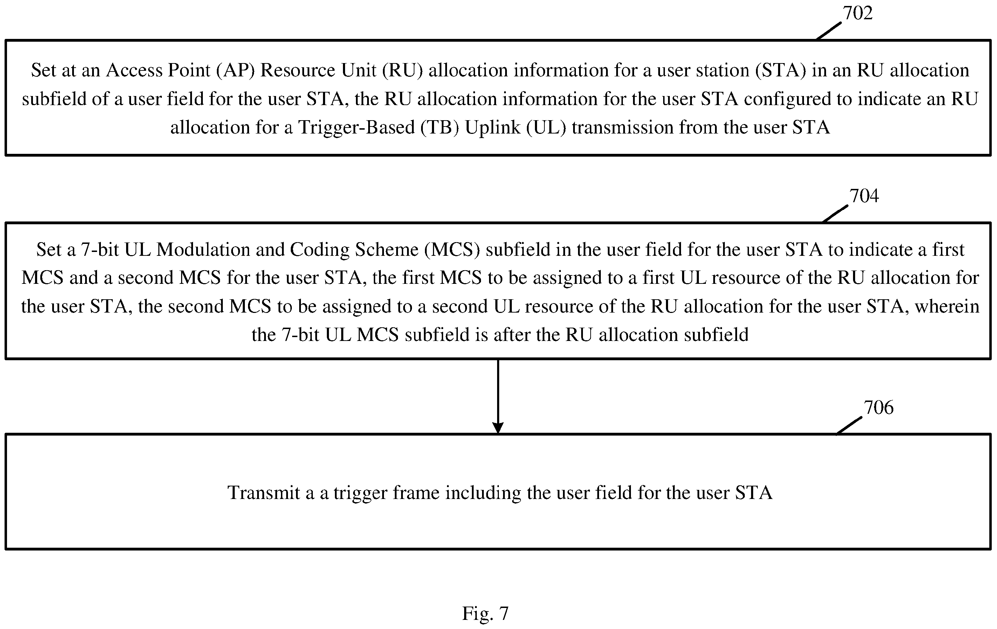

Reference is made to Fig. 7, which schematically illustrates a method of communicating UEM information, in accordance with some demonstrative aspects. For example, one or more of the operations of the method of Fig. 7 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 702, the method may include setting, at an AP, RU allocation information for a user STA in an RU allocation subfield of a user field for the user STA. For example, the RU allocation information for the user STA may be configured to indicate an RU allocation for a TB UL transmission from the user STA. For example, controller 124 (Fig. 1) may be configured to cause, trigger, and/or control device 102 (Fig. 1) to set RU allocation information for a user STA in the RU allocation subfield 204 (Fig. 2), e.g., as described above.

As indicated at block 704, the method may include setting a 7-bit UL MCS subfield in the user field for the user STA to indicate a first MCS and a second MCS for the user STA. For example, the first MCS may be assigned to a first UL resource of the RU allocation for the user STA, and the second MCS may be assigned to a second UL resource of the RU allocation for the user STA. For example, the 7-bit UL MCS subfield may be after the RU allocation subfield. For example, controller 124 (Fig. 1) may be configured to cause, trigger, and/or control device 102 (Fig. 1) to set the 7-bit UL MCS subfield 206 (Fig. 2) to indicate a first MCS and a second MCS for the user STA, e.g., as described above.

As indicated at block 706, the method may include transmitting a trigger frame including the user field for the user STA. For example, controller 124 (Fig. 1) may be configured to cause, trigger, and/or control device 102 (Fig. 1) to transmit the trigger frame, which includes the user field 200 (Fig. 2) for the user STA, e.g., as described above.

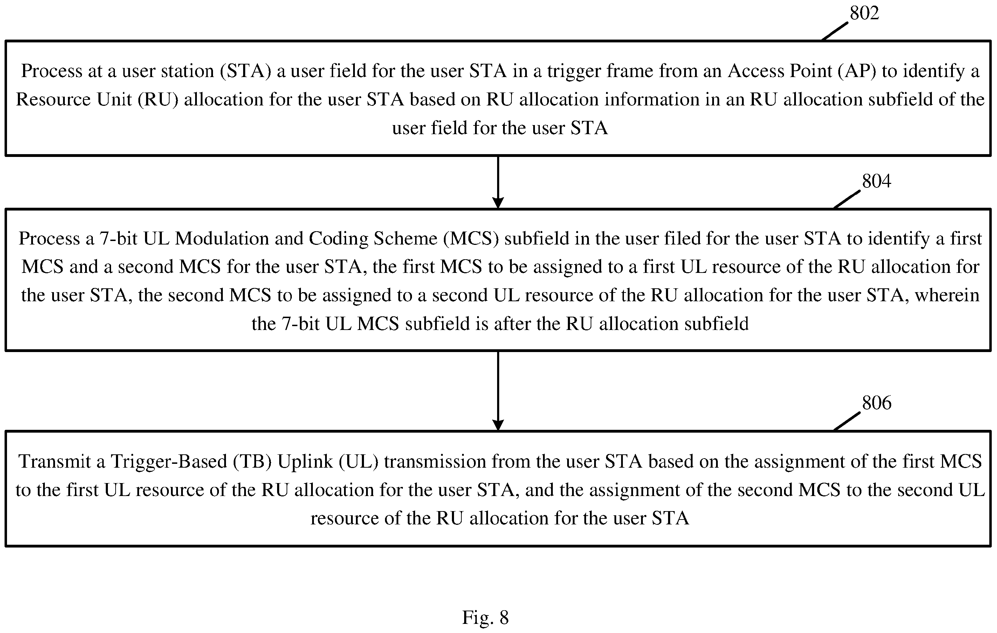

Reference is made to Fig. 8, which schematically illustrates a method of communicating UEM information, in accordance with some demonstrative aspects. For example, one or more of the operations of the method of Fig. 8 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 802, the method may include processing, at a user STA, a user field for the user STA in a trigger frame from an AP, for example, to identify an RU allocation for the user STA, for example, based on RU allocation information in an RU allocation subfield of the user field for the user STA. For example, controller 154 (Fig. 1) may be configured to cause, trigger, and/or control device 140 (Fig. 1) to process the user field 200 (Fig. 2) for device 140 (Fig. 1) in the trigger frame from the AP to identify the RU allocation subfield 204 (Fig. 2) for the user STA, e.g., as described above.

As indicated at block 804, the method may include processing a 7-bit UL MCS subfield in the user field for the user STA, for example, to identify a first MCS and a second MCS for the user STA. For example, the first MCS may be assigned to a first UL resource of the RU allocation for the user STA, and the second MCS may be assigned to a second UL resource of the RU allocation for the user STA. For example, the 7-bit UL MCS subfield may be after the RU allocation subfield. For example, controller 154 (Fig. 1) may be configured to cause, trigger, and/or control device 140 (Fig. 1) to process the 7-bit UL MCS subfield 206 (Fig. 2) in the user specific field 200 (Fig. 2) for device 140 (Fig. 1) to identify the assignment of the plurality of MCSs for device 140 (Fig. 1), e.g., as described above.

As indicated at block 806, the method may include transmitting a TB UL transmission from the user STA, for example, based on the assignment of the first MCS to the first UL resource of the RU allocation for the user STA, and the assignment of the second MCS to the second UL resource of the RU allocation for the user STA. For example, controller 154 (Fig. 1) may be configured to cause, trigger, and/or control device 140 (Fig. 1) to transmit a TB UL transmission from device 140 (Fig. 1) based on the assignment of the first MCS to the first UL resource of the RU allocation for device 140 (Fig. 1), and the assignment of the second MCS to the second UL resource of the RU allocation for device 140 (Fig. 1), e.g., as described above.

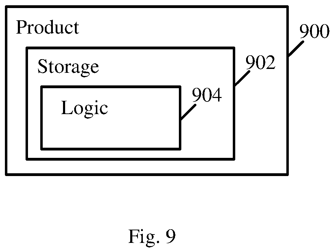

Reference is made to Fig. 9, which schematically illustrates a product of manufacture 900, in accordance with some demonstrative aspects. Product 900 may include one or more tangible computer-readable ("machine-readable") non-transitory storage media 902, which may include computer-executable instructions, e.g., implemented by logic 904, operable to, when executed by at least one computer processor, enable the at least one computer processor to implement one or more operations at device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1); to cause device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1) to perform, trigger and/or implement one or more operations and/or functionalities; and/or to perform, trigger and/or implement one or more operations and/or functionalities described with reference to the Figs. 1, 2, 3, 4, 5, 6, 7, and/or 8, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 900 and/or machine readable storage media 902 may include one or more types of computer-readable storage media capable of storing data, including volatile memory, non-volatile memory, removable or non-removable memory, erasable or non-erasable memory, writeable or re-writeable memory, and the like. For example, machine readable storage media 902 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 904 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 904 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause an Access Point (AP) to set Resource Unit (RU) allocation information for a user station (STA) in an RU allocation subfield of a user field for the user STA, the RU allocation information for the user STA configured to indicate an RU allocation for a Trigger-Based (TB) Uplink (UL) transmission from the user STA; set a 7-bit UL Modulation and Coding Scheme (MCS) subfield in the user field for the user STA to indicate a first MCS and a second MCS for the user STA, the first MCS to be assigned to a first UL resource of the RU allocation for the user STA, the second MCS to be assigned to a second UL resource of the RU allocation for the user STA, wherein the 7-bit UL MCS subfield is after the RU allocation subfield; and transmit a trigger frame comprising the user field for the user STA.

Example 2 includes the subject matter of Example 1, and optionally, wherein the apparatus is configured to cause the AP to set 4 bits in the 7-bit UL MCS subfield to a first MCS value to indicate the first MCS, and to set 3 bits in the 7-bit UL MCS subfield to a second MCS value to indicate the second MCS.

Example 3 includes the subject matter of Example 2, and optionally, wherein the second MCS value is configured to indicate the second MCS based on the first MCS value.

Example 4 includes the subject matter of Example 2 or 3, and optionally, wherein the second MCS value is configured to indicate a difference between a modulation order of the first MCS and a modulation order of the second MCS.

Example 5 includes the subject matter of any one of Examples 2-4, and optionally, wherein the second MCS value is configured to indicate the second MCS based on a predefined mapping of a plurality of predefined second MCSs to a plurality of combinations between a plurality of predefined first MCS values and a plurality of predefined second MCS values.

Example 6 includes the subject matter of any one of Examples 2-5, and optionally, wherein the first MCS has a higher modulation order than the second MCS.

Example 7 includes the subject matter of any one of Examples 2-6, and optionally, wherein the first MCS value comprises an MCS index of the first MCS.

Example 8 includes the subject matter of any one of Examples 2-7, and optionally, wherein the 3 bits in the 7-bit UL MCS subfield are after the 4 bits in the 7-bit UL MCS subfield.

Example 9 includes the subject matter of Example 1, and optionally, wherein the apparatus is configured to cause the AP to set the 7-bit UL MCS subfield to a 7-bit MCS-combination value configured to indicate both the first MCS and the second MCS.

Example 10 includes the subject matter of Example 9, and optionally, wherein the 7-bit MCS-combination value is configured to indicate both the first MCS and the second MCS based on a predefined mapping of a plurality of predefined MCS-combination values to a plurality of predefined combinations of first and second MCSs.

Example 11 includes the subject matter of Example 1, and optionally, wherein the apparatus is configured to cause the AP to set the 7-bit UL MCS subfield comprising a coding-rate value and a modulation value, the coding rate value configured to indicate a same coding rate for both the first MCS and the second MCS, the modulation value configured to indicate a modulation of the first MCS and a modulation of the second MCS.

Example 12 includes the subject matter of Example 11, and optionally, wherein the modulation value is configured to indicate both the modulation of the first MCS and the modulation of the second MCS based on a predefined mapping of a plurality of predefined modulations values to a plurality of predefined combinations of first and second modulations.

Example 13 includes the subject matter of Example 11 or 12, and optionally, wherein the apparatus is configured to cause the AP to set 2 bits in the 7-bit UL MCS subfield to the coding-rate value, and to set 5 bits in the 7-bit UL MCS subfield to the modulation value.

Example 14 includes the subject matter of Example 13, and optionally, wherein the 5 bits in the 7-bit UL MCS subfield are after the 2 bits in the 7-bit UL MCS subfield.

Example 15 includes the subject matter of any one of Examples 1-14, and optionally, wherein the apparatus is configured to cause the AP to set a 5-bit Spatial Stream (SS) allocation subfield in the user field for the user STA to indicate a SS allocation for the user STA, wherein the 5-bit SS allocation subfield is after the 7-bit UL MCS subfield.

Example 16 includes the subject matter of Example 15, and optionally, wherein the apparatus is configured to cause the AP to set 3 bits of the 5-bit SS allocation subfield to indicate a starting SS, and to set 2 bits of the 5-bit SS allocation subfield to indicate a number of spatial streams.

Example 17 includes the subject matter of Example 15 or 16, and optionally, wherein the 5-bit SS allocation subfield is immediately after the 7-bit UL MCS subfield in the user field for the user STA.

Example 18 includes the subject matter of any one of Examples 1-17, and optionally, wherein the apparatus is configured to cause the AP to set the 7-bit UL MCS subfield immediately after the RU allocation subfield in the user field for the user STA.

Example 19 includes the subject matter of any one of Examples 1-18, and optionally, wherein the first MCS is different from the second MCS.

Example 20 includes the subject matter of Example 19, and optionally, wherein the first MCS and the second MCS have a same code rate, wherein the first MCS has a higher modulation order than the second MCS.

Example 21 includes the subject matter of any one of Examples 1-18, and optionally, wherein the first MCS is equal to the second MCS.

Example 22 includes the subject matter of any one of Examples 1-21, and optionally, wherein the first UL resource comprises a first frequency sub-channel and the second UL resource comprises a second frequency sub-channel.

Example 23 includes the subject matter of any one of Examples 1-21, and optionally, wherein the first UL resource comprises one or more first spatial streams and the second UL resource comprises one or more second spatial streams.

Example 24 includes the subject matter of any one of Examples 1-23, and optionally, wherein the user field for the user STA is configured according to a user field format comprising a station (STA) identifier (ID) (STA-ID) subfield to identify the user STA, wherein the RU allocation subfield is after the STA-ID subfield.

Example 25 includes the subject matter of any one of Examples 1-24, and optionally, wherein the apparatus is configured to cause the AP to process an UL Physical layer (PHY) Protocol Data Unit (PPDU) from the user STA according to the first MCS assigned to the first UL resource of the RU allocation for the user STA and the second MCS assigned to the second UL resource of the RU allocation for the user STA.

Example 26 includes the subject matter of any one of Examples 1-25, and optionally, wherein the apparatus is configured to cause the AP to set an other user field in the trigger frame, the other user field comprising other RU allocation information to indicate an other RU allocation for an other user STA, wherein other user field comprises a 4-bit UL MCS subfield comprising an MCS index to indicate an MCS to be applied over the entire RU allocation for the other user STA.

Example 27 includes the subject matter of any one of Examples 1-26, and optionally, wherein the trigger frame comprises an Extremely High Throughput (EHT) trigger frame.

Example 28 includes the subject matter of any one of Examples 1-26, and optionally, wherein the trigger frame comprises an Ultra High Reliability (UHR) trigger frame, wherein the 7-bit UL MCS subfield comprises a UHR MCS subfield.

Example 29 includes the subject matter of any one of Examples 1-28, and optionally, comprising at least one radio to transmit the trigger frame.

Example 30 includes the subject matter of Example 29, and optionally, comprising one or more antennas connected to the radio, and a processor to execute instructions of an operating system.

Example 31 includes an apparatus comprising logic and circuitry configured to cause a user station (STA) to process a user field for the user STA in a trigger frame from an Access Point (AP) to identify a Resource Unit (RU) allocation for the user STA based on RU allocation information in an RU allocation subfield of the user field for the user STA; process a 7-bit UL Modulation and Coding Scheme (MCS) subfield in the user field for the user STA to identify a first MCS and a second MCS for the user STA, the first MCS to be assigned to a first UL resource of the RU allocation for the user STA, the second MCS to be assigned to a second UL resource of the RU allocation for the user STA, wherein the 7-bit UL MCS subfield is after the RU allocation subfield; and transmit a Trigger-Based (TB) Uplink (UL) transmission from the user STA based on the assignment of the first MCS to the first UL resource of the RU allocation for the user STA, and the assignment of the second MCS to the second UL resource of the RU allocation for the user STA.

Example 32 includes the subject matter of Example 31, and optionally, wherein the apparatus is configured to cause the user STA to process 4 bits in the 7-bit UL MCS subfield to identify a first MCS value, and to process 3 bits in the 7-bit UL MCS subfield to identify a second MCS value, wherein the first MCS value is to indicate the first MCS, and the second MCS value is to indicate the second MCS.

Example 33 includes the subject matter of Example 32, and optionally, wherein the second MCS value is configured to indicate the second MCS based on the first MCS value.

Example 34 includes the subject matter of Example 32 or 33, and optionally, wherein the second MCS value is configured to indicate a difference between a modulation order of the first MCS and a modulation order of the second MCS.

Example 35 includes the subject matter of any one of Examples 32-34, and optionally, wherein the second MCS value is configured to indicate the second MCS based on a predefined mapping of a plurality of predefined second MCSs to a plurality of combinations between a plurality of predefined first MCS values and a plurality of predefined second MCS values.

Example 36 includes the subject matter of any one of Examples 32-35, and optionally, wherein the first MCS has a higher modulation order than the second MCS.

Example 37 includes the subject matter of any one of Examples 32-36, and optionally, wherein the first MCS value comprises an MCS index of the first MCS.

Example 38 includes the subject matter of any one of Examples 32-37, and optionally, wherein the 3 bits in the 7-bit UL MCS subfield are after the 4 bits in the 7-bit UL MCS subfield.

Example 39 includes the subject matter of Example 31, and optionally, wherein the apparatus is configured to cause the user STA to process the 7-bit UL MCS subfield to identify a 7-bit MCS-combination value configured to indicate both the first MCS and the second MCS.

Example 40 includes the subject matter of Example 39, and optionally, wherein the 7-bit MCS-combination value is configured to indicate both the first MCS and the second MCS based on a predefined mapping of a plurality of predefined MCS-combination values to a plurality of predefined combinations of first and second MCSs.

Example 41 includes the subject matter of Example 31, and optionally, wherein the apparatus is configured to cause the user STA to process the 7-bit UL MCS subfield to identify a coding-rate value and a modulation value, the coding rate value configured to indicate a same coding rate for both the first MCS and the second MCS, the modulation value configured to indicate a modulation of the first MCS and a modulation of the second MCS.

Example 42 includes the subject matter of Example 41, and optionally, wherein the modulation value is configured to indicate both the modulation of the first MCS and the modulation of the second MCS based on a predefined mapping of a plurality of predefined modulations values to a plurality of predefined combinations of first and second modulations.

Example 43 includes the subject matter of Example 41 or 42, and optionally, wherein the apparatus is configured to cause the user STA to process 2 bits in the 7-bit UL MCS subfield to identify the coding-rate value, and to process 5 bits in the 7-bit UL MCS subfield to identify the modulation value.

Example 44 includes the subject matter of Example 43, and optionally, wherein the 5 bits in the 7-bit UL MCS subfield are after the 2 bits in the 7-bit UL MCS subfield.

Example 45 includes the subject matter of any one of Examples 31-44, and optionally, wherein the apparatus is configured to cause the user STA to process a 5-bit Spatial Stream (SS) allocation subfield in the user field to identify a SS allocation for the user STA, wherein the 5-bit SS allocation subfield is after the 7-bit UL MCS subfield.

Example 46 includes the subject matter of Example 45, and optionally, wherein the apparatus is configured to cause the user STA to process 3 bits of the 5-bit SS allocation subfield to identify a starting SS, and to process 2 bits of the 5-bit SS allocation subfield to identify a number of spatial streams.

Example 47 includes the subject matter of Example 45 or 46, and optionally, wherein the 5-bit SS allocation subfield is immediately after the 7-bit UL MCS subfield in the user field for the user STA.

Example 48 includes the subject matter of any one of Examples 31-47, and optionally, wherein the 7-bit UL MCS subfield is immediately after the RU allocation subfield in the user field for the user STA.

Example 49 includes the subject matter of any one of Examples 31-48, and optionally, wherein the first MCS is different from the second MCS.

Example 50 includes the subject matter of Example 49, and optionally, wherein the first MCS and the second MCS have a same code rate, wherein the first MCS has a higher modulation order than the second MCS.

Example 51 includes the subject matter of any one of Examples 31-48, and optionally, wherein the first MCS is equal to the second MCS.

Example 52 includes the subject matter of any one of Examples 31-51, and optionally, wherein the first UL resource comprises a first frequency sub-channel and the second UL resource comprises a second frequency sub-channel.

Example 53 includes the subject matter of any one of Examples 31-51, and optionally, wherein the first UL resource comprises one or more first spatial streams and the second UL resource comprises one or more second spatial streams.

Example 54 includes the subject matter of any one of Examples 31-53, and optionally, wherein the user field for the user STA is configured according to a user field format comprising a station (STA) identifier (ID) (STA-ID) subfield to identify the user STA, wherein the RU allocation subfield is after the STA-ID subfield.

Example 55 includes the subject matter of any one of Examples 31-54, and optionally, wherein the trigger frame comprises an Extremely High Throughput (EHT) trigger frame.

Example 56 includes the subject matter of any one of Examples 31-54, and optionally, wherein the trigger frame comprises an Ultra High Reliability (UHR) trigger frame, wherein the 7-bit UL MCS subfield comprises a UHR MCS subfield.

Example 57 includes the subject matter of any one of Examples 31-56, and optionally, comprising at least one radio to receive the trigger frame.

Example 58 includes the subject matter of Example 57, and optionally, comprising one or more antennas connected to the radio, and a processor to execute instructions of an operating system.

Example 59 includes a wireless communication device comprising the apparatus of any of Examples 1-58.

Example 60 includes a mobile device comprising the apparatus of any of Examples 1-58.

Example 61 includes an apparatus comprising means for executing any of the described operations of any of Examples 1-58.

Example 62 includes a product comprising one or more tangible computer-readable non-transitory storage media comprising instructions operable to, when executed by at least one processor, enable the at least one processor to cause a wireless communication device to perform any of the described operations of any of Examples 1-58.

Example 63 includes an apparatus comprising: a memory interface; and processing circuitry configured to: perform any of the described operations of any of Examples 1-58.

Example 64 includes a method comprising any of the described operations of any of Examples 1-58.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at a user station (STA), the method comprising:
processing a user field for the user STA in a trigger frame from an Access Point (AP) to identify a Resource Unit (RU) allocation for the user STA based on RU allocation information in an RU allocation subfield of the user field for the user STA;
processing a 7-bit UL Modulation and Coding Scheme (MCS) subfield in the user field for the user STA to identify a first MCS and a second MCS for the user STA, the first MCS to be assigned to a first UL resource of the RU allocation for the user STA, the second MCS to be assigned to a second UL resource of the RU allocation for the user STA, wherein the 7-bit UL MCS subfield is after the RU allocation subfield; and
transmitting a Trigger-Based (TB) Uplink (UL) transmission from the user STA based on the assignment of the first MCS to the first UL resource of the RU allocation for the user STA, and the assignment of the second MCS to the second UL resource of the RU allocation for the user STA.

2. A method to be performed at an Access Point (AP), the method comprising:
setting Resource Unit (RU) allocation information for a user station (STA) in an RU allocation subfield of a user field for the user STA, the RU allocation information for the user STA configured to indicate an RU allocation for a Trigger-Based (TB) Uplink (UL) transmission from the user STA;
setting a 7-bit UL Modulation and Coding Scheme (MCS) subfield in the user field for the user STA to indicate a first MCS and a second MCS for the user STA, the first MCS to be assigned to a first UL resource of the RU allocation for the user STA, the second MCS to be assigned to a second UL resource of the RU allocation for the user STA, wherein the 7-bit UL MCS subfield is after the RU allocation subfield; and
transmitting a trigger frame comprising the user field for the user STA.

3. The method of claim 1 or 2, wherein 4 bits in the 7-bit UL MCS subfield are set to a first MCS value to indicate the first MCS, and 3 bits in the 7-bit UL MCS subfield are set to a second MCS value to indicate the second MCS.

4. The method of claim 3, wherein the second MCS value is configured to indicate the second MCS based on the first MCS value, wherein the second MCS value is configured to indicate a difference between a modulation order of the first MCS and a modulation order of the second MCS, and/or wherein the second MCS value is configured to indicate the second MCS based on a predefined mapping of a plurality of predefined second MCSs to a plurality of combinations between a plurality of predefined first MCS values and a plurality of predefined second MCS values.

5. The method of claim 1 or 2, wherein the 7-bit UL MCS subfield is set to a 7-bit MCS-combination value configured to indicate both the first MCS and the second MCS.

6. The method of claim 5, wherein the 7-bit MCS-combination value is configured to indicate both the first MCS and the second MCS based on a predefined mapping of a plurality of predefined MCS-combination values to a plurality of predefined combinations of first and second MCSs.

7. The method of claim 1 or 2, wherein the 7-bit UL MCS subfield comprises a coding-rate value and a modulation value, the coding rate value configured to indicate a same coding rate for both the first MCS and the second MCS, the modulation value configured to indicate a modulation of the first MCS and a modulation of the second MCS.

8. The method of claim 7, wherein the modulation value is configured to indicate both the modulation of the first MCS and the modulation of the second MCS based on a predefined mapping of a plurality of predefined modulations values to a plurality of predefined combinations of first and second modulations.

9. The method of any one of claims 1-8, wherein a 5-bit Spatial Stream (SS) allocation subfield in the user field for the user STA is set to indicate a SS allocation for the user STA, wherein the 5-bit SS allocation subfield is after the 7-bit UL MCS subfield.

10. The method of any one of claims 1-9, wherein the 7-bit UL MCS subfield is immediately after the RU allocation subfield in the user field for the user STA.

11. The method of any one of claims 1-10, wherein the first UL resource comprises a first frequency sub-channel or one or more first spatial streams, and the second UL resource comprises a second frequency sub-channel or one or more second spatial streams.

12. The method of any one of claims 1-11, wherein the trigger frame comprises an other user field comprising other RU allocation information to indicate an other RU allocation for an other user STA, wherein the other user field comprises a 4-bit UL MCS subfield comprising an MCS index to indicate an MCS to be applied over the entire RU allocation for the other user STA.

13. An apparatus comprising a controller configured to cause a wireless communication device to perform the method of any one of claims 1-12.

14. The apparatus of claim 13 comprising at least one radio to communicate the trigger frame, one or more antennas connected to the radio, and a processor to execute instructions of an operating system.

15. A product comprising one or more tangible computer-readable non-transitory storage media comprising instructions operable to, when executed by at least one processor, enable the at least one processor to cause a wireless communication device to perform the method of any one of claims 1-12.
